# EUROPEAN PATENT APPLICATION

(11) **EP 3 760 375 A1**
(43) Date of publication of application: **06.01.2021**
(21) Application number: 19194847.0
(22) Date of filing: 02.09.2019
(51) Int. Cl.: B24B 23/03, B24B 23/04, B24B 41/00, B24B 41/04, B25F 5/00, B23Q 11/10

(54) **AN ECCENTRIC MECHANISM AND A POWER TOOL**

(30) Priority: 04.07.2019 CN 201910601787
(71) Applicant: YongKang HaoWei Tools Co., Ltd., YongKang, ZheJiang (CN); Griot's Garage, Inc., Tacoma, WA 98409 (US)
(72) Inventor: CHEN, Yingjie, YongKang, Zhejiang (CN); BROWN, Jeffrey Lee, Tacoma, WA, 98409 (US)
(74) Representative: Sun, Yiming

(57) **Abstract**

The invention discloses an eccentric mechanism, comprising an eccentric block assembly and a weight structure and a heat dissipating component for balancing the axis channel disposed on the eccentric block assembly on the same axis as the shaft channel 2 when rotating; The assembly is connected to the eccentric block assembly, and is provided with a plurality of blade structures. Under the driving of the driving mechanism, the working components are synchronously rotated to dissipate heat for the structural unit. There is also provided a power tool comprising a housing mechanism, a driving mechanism, an output mechanism and a working component, the output mechanism comprising: an output shaft, one end connected to the driving mechanism; the eccentric mechanism described above, the eccentric mechanism passing the rotating shaft and the the working parts are connected. The power tool is provided with a heat dissipating mechanism to dissipate heat from the power tool, especially for working parts such as a grinding head and a polishing head, thereby greatly improving the service life of the tool and better protecting the product such as the surface medium of the automobile. The surface of the product is smoother.

## Description

### Technical field

The invention relates to the field of tools, and in particular to involve an eccentric mechanism and a power tool.

### Background technique

Power tools as hardware tools, such as grinding machines or polishing machines, are indispensable tools in human life. The power tool is a tool that works by electric driving such as electric motor. The inside of the casing contains heat-generating components, such as drivers or electronic components, and the sander or polisher operates under the drive of the drive, also generates a lot of heats. The heats are concentrated in the outer casing, or the sander or polisher needs to dissipate the generated heats, because there are continuous or even long-term works. On the one hand, it ensures the continuous or long-term use of the tool, and on the other hand, it is the most important, and can provide the service lives.

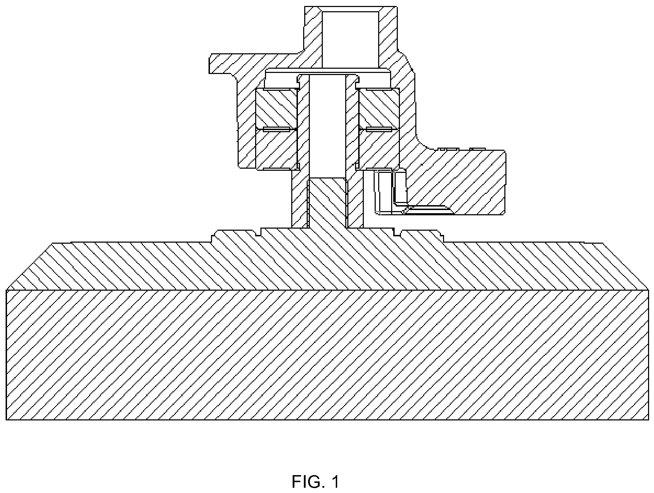

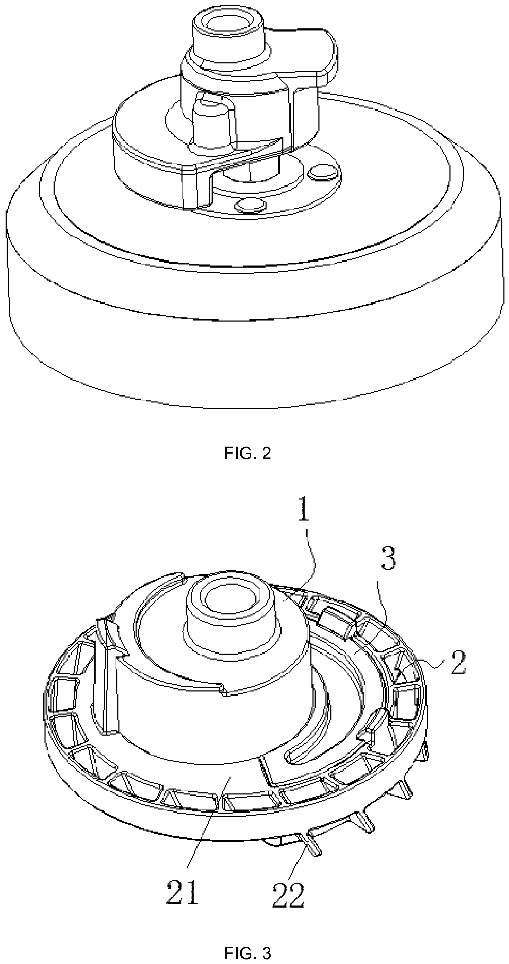

In the prior art, as shown in FIGS. 1 and 2, the existing power tool has no heat dissipating mechanism disposed on the working unit, and the working unit is directly connected to the driving unit through the eccentric structure, and the working unit is in the process of long-term or continuous rotation, and the working unit will be hot. and the working unit, and the overall temperature of the power tool rises, especially if the working unit is directly used for grinding or polishing. If the temperature is not released well, it will have a great impact on the power tool. The service life is greatly reduced. On the other hand, the heat of the working unit is transferred to a surface such as a polished surface such as the cars, and damage is also caused to a medium that needs to be polished or polished, such as the car surfaces.

DE102007000290A1 discloses that airs are provided or directed by an air guiding element defining a second air flow passage through, which at least a portion of the non-oriented primary air flow can be delivered to the electronic component. In this case, the electronic component is disposed within the end of the handle housing portion that is remote from the driver housing portion. The airflow is drawn into the housing by an fan device of the power tool through a plurality of housing slots and then flows along the main airflow path to the fan device, the primary airflow passage being defined by the driver housing mechanism portion. The air guiding element is disposed substantially perpendicular to the direction of the primary airflow along the drive motor, and directs the second airflow into the outer casing of the handle portion, the outer casing being disposed substantially perpendicular to the outer casing of the driver. In the prior art, although the solution to solve the problem of heat dissipation of the power tool is provided to a certain extent, since the air guiding element is disposed outside, in the case where the intake air is dissipated, the dust particles and the like can be passed through the Inhalation of the air inlet may damage the power tool or at least have a negative impact on the service life of the power tool.

### Summary of the invention

The present invention is directed to the deficiencies in the prior art, and provides a power tool provided with a heat dissipating mechanism for dissipating heat of the electric tool, in particular, dissipating heat to work parts such as a grinding head and a polishing head, thereby greatly improving the service life of the tool. Better protection of products such as automotive surface media, smoother surface after treatment.

In order to solve the above technical problems, the present invention is solved by the following technical solutions:
An eccentric mechanism, comprising:
an eccentric block assembly;
a weight structure, for balancing the eccentric block assembly while rotating, so that a shaft passage one and a shaft passage two provided on the eccentric block are located on the same axis when the eccentric block assembly is rotated; and
a heat dissipating component, wherein the heat dissipating component is connected with the eccentric block assembly, and is provided with an fan structure comprising a plurality of fan blade structures driven by a drive mechanism, wherein the heat dissipating component rotates synchronously with a working part, to dissipate heat for structural units .

Further adequate technical solutions, wherein the heat dissipating component further comprises:
a mounting structure, configured to mount the eccentric block assembly and the weight structure, comprising a mounting base, an first placement region disposed on the mounting base and a second placement region disposed on the mounting base,
wherein the first placement region is configured to place the weight structure, and the second placement region is configured to place the eccentric block assembly; and
an fan structure, comprising the plurality of the fan blade structures, and the fan structure is disposed on the mounting structure.

Further adequate technical solutions, wherein the weight structure further comprises:
a counterweight section one;
a counterweight section two, wherein an upper end surface of the counterweight section two is lower than an upper end surface of the counterweight section one, and the upper end surface of the counterweight section two is used for supporting and /or mounting of the eccentric block assembly, and /or
a counterweight section three ,is disposed on the eccentric block assembly.

Further adequate technical solutions, wherein the weight structure comprises:
a counterweight section one;
a counterweight section two, wherein the counterweight section one is formed from a radial extension of the counterweight section two, and the upper end surface of the counterweight section two is used for supporting and /or mounting the eccentric block assembly, and /or
a counterweight section three ,is disposed on the eccentric block assembly.

Further adequate technical solutions, wherein the mounting base further comprises:
an first base, provided with an first positioning mechanism for positioning the weight structure;
a second base, provided with a second positioning mechanism for positioning the eccentric block assembly; and
a joint portion, comprising a juncture of the first base and the second base; and
wherein the first positioning mechanism comprises:
   an first support assembly, disposed at a lower portion of the first base, and configured to support the weight structure; and
   an first clamping assembly, is disposed at an upper portion of the first base, and configured to clamp the weight structure; and
wherein the second positioning mechanism comprises:
   a second support assembly, disposed at a lower portion of the second base, and is configured to support the eccentric block assembly; and
   a second clamping assembly, disposed at an upper portion of the second base, and is configured to clamp the eccentric block assembly.

Further adequate technical solutions, wherein the first support assembly comprises at least a support portion one, comprising a protrusion structure formed by radially extending from an inner wall of the first base, wherein the support portion one can be continuous or disconnected internally; and/or
wherein the second support assembly comprises at least a support portion two, comprising a protrusion structure formed by radially extending from the inner wall of the second base, wherein the support portion two can be continuous or disconnected internally.

Further adequate technical solutions, wherein the first support assembly comprises at least a support member one, wherein the support member one is detachably connected to the lower portion of the weight structure or the lower portion of the first base, or both, and is configured to support the weight structure; and/or

wherein the second support assembly comprises at least a support member two, wherein the support member two is detachably connected to the lower portion of the weight structure, or the lower portion of the second base, or both, and is configured to support the eccentric block assembly.

Further adequate technical solutions, wherein the first support assembly comprises at least a support member one, wherein the support member one can be continuous or disconnected internally, wherein the support member one further comprises:
a connecting portion one, comprising a protruding structure formed by extending a lower end surface of the first base in an axial direction; and
a support portion, comprising a protruding structure formed by extending the connecting portion one in a radial direction, and is configured to support the weight structure; and/or
wherein the second support assembly comprises at least a support member two, wherein the support member two is continuous or disconnected internally, wherein the support member two further comprises:
   a connecting portion two, comprising a protruding structure formed by extending from a lower end surface of the second base in the axial direction; and
   a support portion two, comprising a protruding structure formed by extending from the connecting portion two in a radial direction, and configured to support the eccentric block assembly.

Further adequate technical solutions, wherein the first clamping assembly comprises at least a clamping member one, wherein the clamping member one can be continuous or disconnected internally, and wherein the clamping member one further comprises:
an first connecting portion, comprising a protrusion structure formed by extending an upper end surface of the first base in an axial direction; and
an first clamping portion, comprising a protrusion structure formed by extending from the first connecting portion in a radial direction, and configured to block the axial movement of the weight structure; and/or
wherein the second clamping assembly comprises at least a clamping member two, wherein the clamping member two can be continuous or disconnected internally, and wherein the clamping member two further comprises:
   a second connecting portion, comprising a protrusion structure formed by extending from an upper end surface of the second base in an axial direction; and
   a second clamping portion, comprising a protrusion structure formed by extending from the second connecting portion in a radial direction, and configured to block the axial movement of the eccentric block assembly.

Further adequate technical solutions, wherein the first placement region is formed by the area enclosed of the joint portion, the first clamping portion, the first base and the support portion one; and/or
wherein the second placement region is formed by the area enclosed of the second clamping portion, the second base and the support portion two.

Further adequate technical solutions, wherein the fan structure is disposed on an outer end surface of the mounting structure, further comprising:
the fan blade structure is distributed along a circumferential direction of the mounting base, and extending in a radial direction from an outer end surface of the mounting base; and
a second flow guiding passage, comprising a space formed between neighboring fan blade structure, wherein airflow is generated by the rotation of the fan blade structure driven by the rotation of the driving mechanism and/or working part and/or vane structure, wherein the airflow is outputted towards the working part through the second flow guiding channel, and wherein heat generated by an electric tool is dissipated.

Further adequate technical solutions, wherein the fan structure is disposed on the outer end surface of the mounting structure, further comprising:
the fan blade structure, distributed along a circumferential direction of the mounting base, and extending in a radial direction from an outer end surface of the mounting base;
an outer ring structure, comprising an annular structure disposed around the outer end of the blade structure;
a second flow guiding passage, comprising a space formed by neighboring fan blade, ,as well as space between the blade structure and the outer ring structure, wherein airflow is generated by the rotation of the fan blade structure driven by the rotation of the driving mechanism and/or working part and/or vane structure, wherein the airflow is outputted towards the working part through the second flow guiding channel, and wherein heat generated by an electric tool is dissipated.

Further adequate technical solutions, wherein the fan blade structure further comprises:
a blade one, configured to have a length direction disposed along the outer end surface of the first base; and
a blade two, configured to have a length direction disposed along the outer end surface of the second base;
wherein the direction in which the fan blade structure is disposed does not parallel with the axial direction of the mounting base, thus forming an angle A.

A power tool, comprising:
a housing mechanism;
a driving mechanism disposed in the housing mechanism;
an output mechanism connected to the driving mechanism and disposed in the housing mechanism;
working parts configured for the operation of the power tool;
the output mechanism further comprises an output shaft having one end connected to the driving mechanism; and
the eccentric mechanism of any technical solutions about the eccentric mechanism, wherein the eccentric mechanism is coupled to the working parts via a rotating shaft.

Further adequate technical solutions, the power tool further comprising a flow guiding device disposed on the housing mechanism, comprising:
a flow guiding body, composed of a part of the housing mechanism;
a baffle, disposed on the deflector body and disposed at an angle to the flow guiding body; and
at least an first guiding channel, comprising a channel formed between the baffle and the flow guiding body, and a channel formed between adjacent baffles, wherein the flow guiding path of the first guiding channel is disposed at an angle with the flow guiding body.

Further adequate technical solutions, wherein the first flow guiding channel further comprises:
an first passage, comprising an opening portion of the flow guiding body;
a second passage, comprising a space formed by a joint surface of the flow guiding body, the first end surface and the second end surface of the baffle;
wherein a flow path formed by the first channel and/or the second channel is gradually increased; and
wherein with the rotation of the drive mechanism and/or the working parts and/or the blade structure, the airflow generated by the rotation of the blade structure passes, through the second flow channel to the working parts or the first flow channel, to realize the dissipation of heat from the power tool.

Further adequate technical solutions, wherein the housing mechanism comprises:
an first housing assembly, disposed in a lateral direction for wrapping internal members;
a second housing assembly, disposed longitudinally relative to the first housing assembly; and
at least one of the following: an first holding device for a user to hold and disposed on the first housing assembly, and a second holding device for a user to hold and disposed on the second housing assembly; wherein the second holding device is disposed on a side of the second housing assembly remote from a control structure, and wherein the first holding device and the second holding device are disposed to match the curvature of the user's fingers, and wherein the respective holding portions can be set to different concave surfaces.

The present invention achieves the following beneficial effects:
(1) The eccentric mechanism of the present invention is provided with a heat dissipating component, and the fan blade structure on the heat dissipating component, is synchronously rotated with the working component under the driving of the driving mechanism, and may be a structural unit for mounting the eccentric mechanism, for example , the power tool dissipates heat, thereby greatly improving the service life of the equipment or tools involved in the structural unit. For example, when used on a power tool, the service life of the power tool can be greatly improved;
(2) The electric power tool of the present invention, includes an eccentric mechanism provided with a heat dissipating component, and the wind blade structure is driven by a rotating medium generated by the driving mechanism, that is, a wind power, and the electric power tool is passed through the second guiding channel and the first guiding channel. The heat generated by the casing is output to the external space through the first guiding channel. The direction of the wind flow generated by the rotation of the blade structure, can also be transported along the direction of the working component, that is, from the direction in which the protective cover is disposed toward the working component. The heat generated by the power tool is dissipated to achieve the purpose of heat dissipation, especially the heat dissipation of the working component, which not only improves the service life of the power tool, but also plays a good role in the working medium such as the surface of the automobile. The protective effect is such that the polishing effect is good when the power tool is used as a grinding device.

The additional aspects and advantages of the invention, will be set forth in part in the description which follows.

### DRAWINGS

The drawings described herein are intended to provide a further understanding of the invention, and are intended to be a part of the invention. In the drawings:
Figure 1 is a cross-sectional view of a prior art;
Figure 2 is a schematic structural view of a prior art;
Figure 3 is a schematic structural view of the first embodiment of the eccentric mechanism according to the present invention;
Figure 4 is a cross-sectional view of the first embodiment of the eccentric mechanism according to the present invention;
Figure 5 is a front elevational view of the first embodiment of the eccentric mechanism according to the present invention;
Figure 6 is a schematic structural view of the second embodiment of the eccentric mechanism according to the present invention;
Figure 7 is a front elevational view of the second embodiment of the eccentric mechanism according to the present invention;
Figure 8 is a front elevational view of the third embodiment of the eccentric mechanism according to the present invention;
Figure 9 is a schematic structural view of the first embodiment of the fan structure according to the present invention;
Figure 10 is a schematic structural view of the second embodiment of an fan structure according to the present invention;
Figure 11 is a cross-sectional view of the second embodiment of the fan structure according to the present invention;
Figure 12 is an first schematic structural view of the first embodiment of the mounting structure according to the present invention;
Figure 13 is a second structural view of the first embodiment of the mounting structure according to the present invention;
Figure 14 is an first schematic structural view of the second embodiment of the mounting structure according to the present invention;
Figure 15 is a second schematic structural view of the second embodiment of the mounting structure according to the present invention;
Figure 16 is a schematic structural view of the third embodiment of the mounting structure according to the present invention;
Figure 17 is a schematic structural view of the embodiment of the weight structure according to the present invention;
Figure 18 is a front elevational view of the first embodiment of the weight structure according to the present invention;
Figure 19 is a front elevational view of the second embodiment of the weight structure according to the present invention;
Figure 20 is a schematic structural view of the embodiment of the eccentric block assembly according to the present invention;
Figure 21 is a cross-sectional view of the embodiment of the eccentric block assembly according to the present invention;
Figure 22 is a schematic structural view of the embodiment of a power tool according to the present invention;
Figure 23 is a cross-sectional view showing the embodiment of a power tool o according to the present invention;
Figure 24 is a schematic structural view of the embodiment of the first holding device according to the present invention;
Figure 25 is a schematic structural view of the embodiment of the second holding device according to the present invention;
Figure 26 is a schematic structural view of the embodiment of the second housing assembly according to the present invention;
Figure 27 is a schematic structural view of the embodiment of the flow guiding device according to the present invention;
Figure 28 is a schematic structural view of the embodiment of the flow guiding device according to the present invention;
Figure 29 is a schematic structural view of the embodiment of the flow guiding device according to the present invention;
Figure 30 is a schematic structural view of the embodiment of the flow guiding device according to the present invention;
Figure 31 is a schematic structural view of the embodiment of the flow guiding device according to the present invention.

### Detailed ways

In order to make the objects, technical solutions and advantages of the embodiments of the present invention more clearly, the technical solutions of the embodiments of the present invention, will be clearly and completely described in the following with reference to the accompanying drawings. It is apparent that the described embodiments are part of the embodiments of the invention, and not all of the embodiments. All other embodiments obtained by a person of ordinary skill in the art based on the described embodiments of the present invention without departing from the scope of the invention are within the scope of the invention.

In the description of the present invention, it is to be understood that the terms "center", "longitudinal", "transverse", "length", "width", "thickness", "upper", "lower", "front", " Orientation or position of indications such as "back", "left", "right", "vertical", "horizontal", "top", "bottom", "inside", "outside", "clockwise", "counterclockwise", etc. The relationship is based on the orientation or positional relationship shown in the drawings, and is merely for the convenience of the description of the invention and the simplification of the description, and does not indicate or imply that the device or component referred to has a specific orientation, is constructed and operated in a specific orientation, and thus it is not to be understood as limiting the invention.

Moreover, the terms "first" and "second", are used for descriptive purposes only and are not to be construed as indicating or implying a relative importance, or implicitly indicating the number of technical features indicated. Thus, features defining "first" and "second" may include one or more of the features either explicitly or implicitly. In the description of the present invention, the meaning of "a plurality" is two or more unless specifically and specifically defined otherwise.

In the present invention, the terms "installation", "connected", "connected", "fixed" and the like shall be understood broadly; and may be either a fixed connection or a detachable connection, unless explicitly stated and defined otherwise, or connected integrally. May be mechanical connection or electrical connection. May be directly connected, or may be indirectly connected through an intermediate medium, and may be internal communication between the two elements. For those skilled in the art, the specific meanings of the above terms in the present invention can be understood on a case-by-case basis.

In the present invention, the first feature "on" or "under" the second feature may include direct contact of the first and second features, and may also include first and second features, unless otherwise specifically defined and defined. It is not in direct contact but through additional features between them. Moreover, the first feature "above", "above" and "above" the second feature includes the first feature directly above and above the second feature, or merely indicating that the first feature level is higher than the second feature. The first feature "below", "below" and "below" the second feature includes the first feature directly below and below the second feature, or merely the first feature level being less than the second feature.

Unless otherwise defined, the technical terms or scientific terms used herein shall be taken to mean the ordinary meaning of the ordinary skill in the art to which the invention pertains. The words "first", "second" and similar terms used in the specification and claims of the present invention does not denote any order, quantity, or importance, but are merely used to distinguish different components. Similarly, the words "a" or "an" and the like do not denote a quantity limitation, but mean that there is at least one.

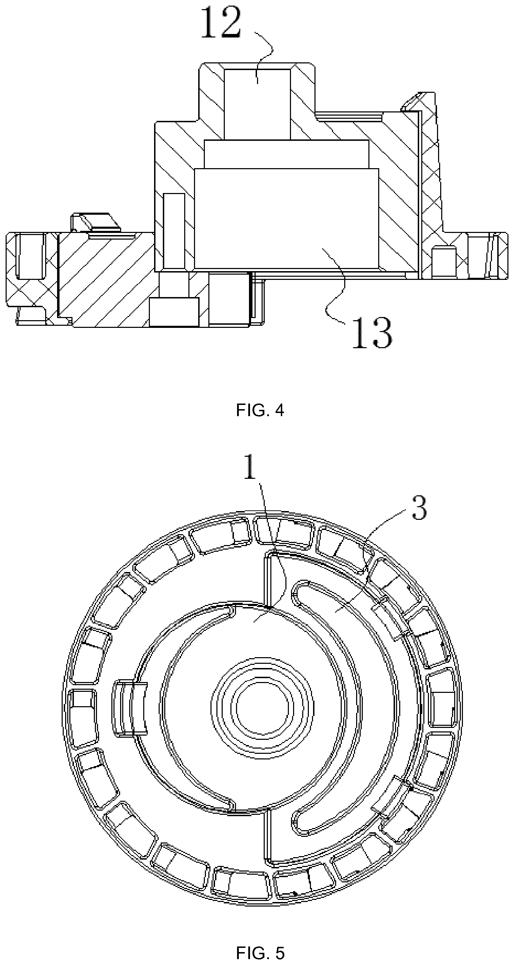

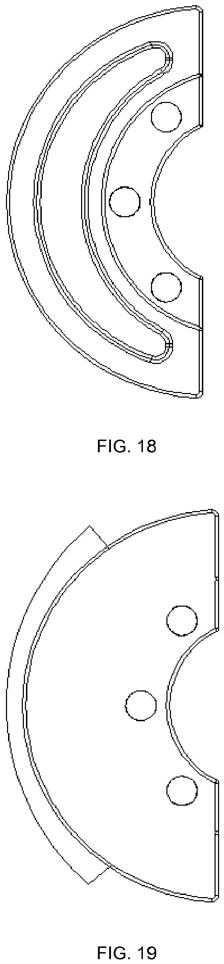

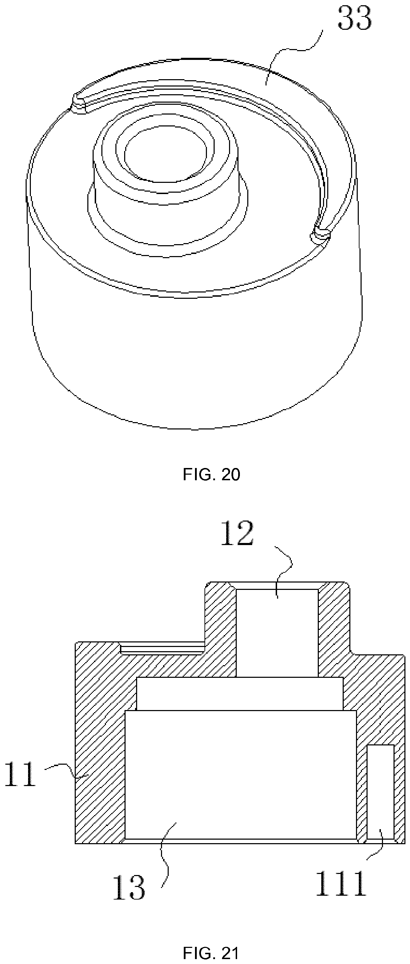

As shown in FIG. 3-21, as an embodiment of the present invention, the eccentric mechanism 500 of the present invention can be used for the connection portion of various output mechanisms 300, and mainly functions as an axial connection. The embodiment is described by taking an eccentric mechanism 500 for a power tool as an example. On the one hand, the power tool is used to drive the working component 400 to rotate to realize the operation of the power tool. On the other hand, the eccentric mechanism 500 is further provided with a heat dissipation component 2. In the embodiment of the present invention, the eccentric mechanism 500 is used for heat dissipation of a power tool, and specifically a grinding device is preferably used as the power tool as an example. In this embodiment, the working component 400 is connected to the eccentric mechanism 500,when the working component 400 is used as the sanding component, it can be said that the heat dissipating component 2 is disposed on the sanding component, and the heat dissipating component 2 is mainly used for dissipating heat of the sanding component. Because the grinding parts are in continuous or long-term operation, especially during continuous grinding, the grinding parts are very easy to heat due to the faster rotation speed. On the one hand, the heat of the grinding part greatly reduces the service life. On the other hand, the heat of the grinding part is transmitted to the workpiece, so that the workpiece will also generate heat, thereby affecting the quality of the grinding, and even damage to the workpiece due to temperature rise. Therefore, the heat dissipating component 2 of the present invention is disposed on the eccentric mechanism 500, and in particular, the sanding component can be dissipated, thereby improving the service life of the power tool. In this embodiment, as shown in FIG. 3, the eccentric mechanism 500 includes an eccentric block assembly 1 and a heat dissipating component 2, and a weight structure 3, wherein the heat dissipating component 2 is connected to the eccentric block assembly 1, It can be set as an integral structure or a component body structure. As seen from the positional structure, if the working component 400 is visible as the lower end, the heat dissipating component 2 can be disposed above the eccentric block assembly 1, that is, the heat dissipating component 2, the eccentric block component 1 and the working component 400 are sequentially disposed from top to bottom. The heat dissipating component 2 may also be disposed below the eccentric block assembly 1, that is, the eccentric block assembly 1, the heat dissipating component 2, and the working component 400 are sequentially disposed from top to bottom. The heat dissipating component 2 of the present invention is provided with a plurality of blade structure 221, which are driven to rotate synchronously with the working component 400, under the driving of the driving mechanism 200 to achieve heat dissipation of the power tool, especially for the working component 400,then the components are cooled. In the present embodiment, as shown in FIGS. 4 and 21, the eccentric block assembly 1 includes an eccentric block body 11. A shaft passage one 12 is disposed at one end of the eccentric block body 11, for mounting and connecting one end of the output shaft, a shaft passage two 13 is disposed at the other end of the eccentric block body 11, for mounting and connecting the rotating shaft. Wherein the axis channel one 12 and the axis of the axis channel two13 are not in the same line. In the heat dissipating component 2 of the present embodiment, the mounting structure 21 and the weight structure 3 provided on the heat dissipating component 2 are adapted, such that the eccentric block assembly 1 rotates the working component 400 during the rotation operation, then the shaft passage one 12 is located on the same line as the axis of the shaft passage two 13.

According to an embodiment of the invention, the heat dissipation assembly 2 comprises a mounting structure 21 and an fan structure 22, wherein the mounting structure 21 is mainly used for the mounting of the weight structure 3 and the eccentric block assembly 1, In other words, for the mounting and connection of the counterweight structure 3 and the eccentric block assembly 1. The fan structure 22 may be provided in an integral structure with the mounting structure 21, or may be provided as a separate structure. When the component body structure is provided, the fan structure 22 is preferably disposed on the outside of the mounting structure 21,the fan structure 22 is blocked with the mounting structure 21, and when the blade structure 221 is rotated, the air or the heats in the power tool and the working member 400 can be well circulated, thereby being from the inside of the power tool housing, the heat is circulated to the outside, preferably in the direction in which the working member 400 is mounted, to achieve heat dissipation to the power tool. When provided in a unitary configuration, the fan structure 22 is preferably disposed at the outer end of the mounting structure 21, to ensure circulation of air during rotation of the fan blade structure 221 to thereby direct air from the interior of the power tool housing to the exterior, preferably to the working member 400. The direction is circulated to achieve heat dissipation from the power tool. In this embodiment, the weight structure 3 is used to balance the eccentric mechanism 500, to ensure that the two axes of the eccentric block assembly 1 are on the same straight line when rotating. The weight structure 3 of the present embodiment may be disposed integrally with the mounting structure 21, or may be a separate structure. when the split structure is provided, the weight structure 3 is located in the first placement area 212 disposed on the mounting structure 21, Moreover, the axis of the weight structure 3 is not in line with the axis of the transmission shaft, and the weight structure 3 is used to balance the axis of the eccentric block assembly 1. The weight structure 3 of the present embodiment may also be provided as an integral structure with the eccentric block assembly 1, or may be a separate structure. When the split structure is provided, the weight structure 3 is located at the first placement area 212 provided on the mounting structure 21. Internally, and the axis of the weight structure 3 is not in the same line as the axis of the transmission shaft. The weight structure 3 may be an independent structure, or may be a separate structure and may also be disposed on the eccentric block assembly 1, all are within the scope of protection of the present invention.

According to an embodiment of the present invention, as shown in FIG. 3-5, as an first embodiment, the weight structure 3 includes a weight portion one31 and a weight portion two32, And the weight portion one 31 and the weight portion two 32 of the embodiment may be provided as an integral structure, or a component body structure may be provided. When the weight portion one 31 and the weight portion two 32 are disposed in a split configuration, the weight portion one 31 and the weight portion two 32 are substantially abutted together when combinedly connected. In this embodiment, the upper end surface of the weight portion two 32 is slightly lower than the upper end surface of the weight portion one 31, wherein the upper end surface of the weight portion two32 is for supporting the eccentric block assembly 1, or is for mounting the eccentric block assembly 1. When the eccentric block assembly 1 abuts against the upper end surface of the weight portion two 32 in a contactable or gap-fit manner, the eccentric block assembly 1 is supported by the weight portion two 32. In the present embodiment, the weight structure 3 may further include a weight portion three 33, and the weight portion three 33 is disposed on the eccentric block assembly 1. From the set position, the weight portion three 33 is disposed on one side of the eccentric block assembly 1 , that is, the weight portion three 33 is disposed on the eccentric block body 11 , wherein is away from the weight portion one 31 on the eccentric block body 11 and on the side of the counterweight portion 32. Its function is to achieve a balance when the eccentric mechanism 500 and the working member 400 are rotated. In this embodiment, the setting of the weight portion three 33 is defined according to the overall layout of the eccentric block assembly 1. When the arrangement of the weight portion one31 and the weight portion two32 is sufficient to balance the rotation of the eccentric block assembly 1, The weight portion three 33 may be omitted , or the type and position required for the weight portion three 33 may be correspondingly set according to the arrangement of the weight portion one31 and the weight portion two32. The weight portion three 33 may be omitted, or the type and position required for the weight portion three 33, may be correspondingly set according to the arrangement of the weight portion one 31 and the weight portion two 32. In terms of implementation and configuration, The structure of the weight portion three 33 is not limited to the structure of the embodiment and the drawings. For example, in the embodiment, the weight portion three 33 is provided as a crescent-shaped structure, and may also be various shapes such as an ellipse, a circle, a square, a polygon, a star, and so on.

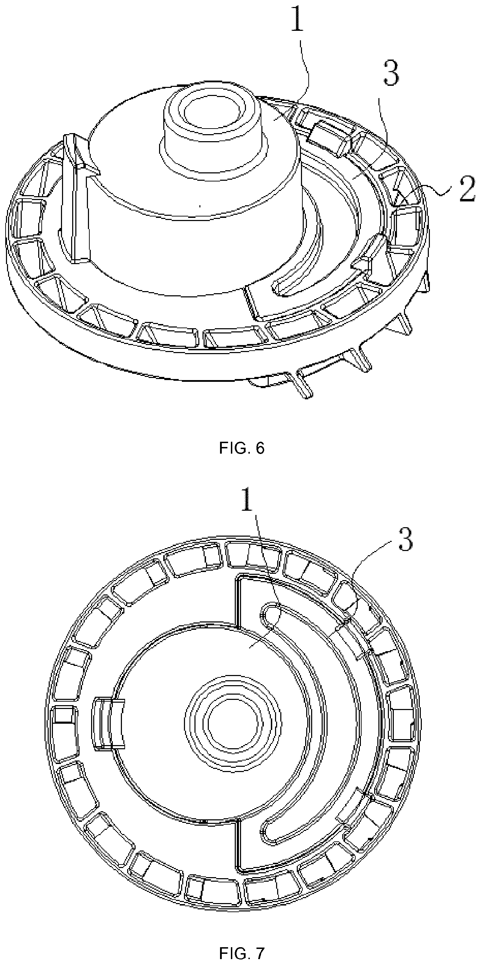

According to an embodiment of the present invention, as shown in FIGS. 6 and 7, as a second embodiment, the weight structure 3 includes a weight portion one31 and a weight portion two32. The weight portion one 31 and the weight portion two 32 can be arranged in an integral structure, also a component body structure can also be provided. When the structure is set as the split structure, the weight portion one31 and the weight portion two32 are basically abutted together. In the present embodiment, the weight portion one 31 is a protrusion structure formed by the radial extension of the weight portion two 32 , and the shape is not limited, as long as the rotation of the eccentric block assembly 1 of the present embodiment and the operation of the working member 400 can be balanced. That is, the upper end surface of the weight portion two32 is used to support the eccentric block assembly 1, or is used for the mounting of the eccentric block assembly 1. When the eccentric block assembly 1 abuts against the upper end surface of the weight portion 32 in a contactable or gap-fit manner, the eccentric block assembly 1 is supported by the weight portion 32. In this embodiment, the setting of the weight portion three 33 is defined according to the overall layout of the eccentric block assembly 1. When the arrangement of the weight portion one31 and the weight portion two32 is sufficient to balance the rotation of the eccentric block assembly 1, The weight portion three 33 may be omitted , or the type and position required for the weight portion three 33 may be correspondingly set according to the arrangement of the weight portion one31 and the weight portion two32. In terms of implementation and configuration, the structure is limited to the structure of the embodiment and the drawings. For example, in the embodiment, the weight portion three 33 is provided as a crescent-shaped structure. It can also be a structure of various shapes such as an ellipse, a circle, a square, a polygon, a star, and so on.

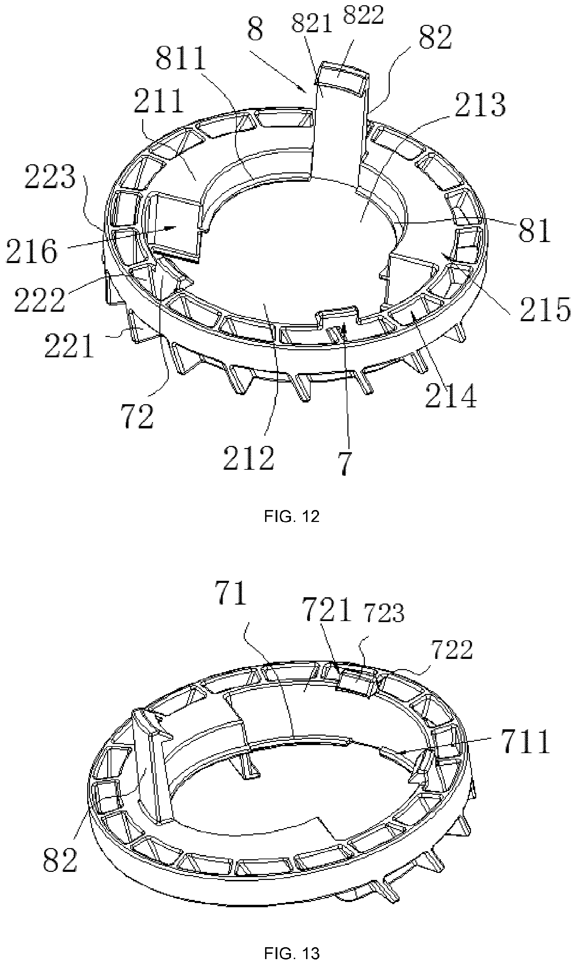

According to an embodiment of the present invention, as shown in FIGS. 12-16, the mounting structure 21 is mainly used for the mounting and placement of the weight structure 3 and the eccentric block assembly 1, including the mounting base 211, the first placement area 212, and the second placement 213. Wherein the first placement area 212 and the second placement area 213 are both disposed on the mounting base 211, may be disposed in whole or in part on the mounting base 211, and the first placement area 212 and the second placement area 213 have the concept of space, which is provided with areas for the items to be placed, may be set as an independent space, or may be a space that is arranged to cross each other, that is, an intersection area having a part for the items to be placed. In the present embodiment, the weight structure 3 is mounted or placed in the first placement area 212, to achieve the positioning of the weight structure 3. And the eccentric block assembly 1 is mounted or placed in the second placement area 213, to achieve the positioning of the eccentric block assembly 1. Thereby effectively preventing the axial and radial movement of the weight structure 3 and the eccentric block assembly 1, and ensuring that the weight structure 3 and the eccentric block assembly 1 are installed and placed stably. Therefore, when the power tool is in operation, the working member 400 for example, as a sanding member, the working member 400 can rotate smoothly, so that the grinding effect is better. When used on power tools, the grinding effect is also better. In this embodiment, the mounting base 211 includes an first base 214 and a second base 215 and a joint portion 216, wherein the joint portion 216 is formed by the juncture of the first base 214 and the second base 215. In this embodiment, the first placement area 212 is disposed on the first base 214, and correspondingly disposed on the first base 214 is a first positioning mechanism 7 for positioning the weight structure 3. When the weight structure 3 is placed and installed in the first placement area 212, the position of the weight structure 3 is positioned by the first positioning mechanism 7, and effectively preventing the axial and radial movement of the weight structure 3, then ensuring that the weight structure 3 is placed stably. Therefore, during the grinding process, the weight structure 3 and the working member 400 do not slide or move when rotating. The second placement area 213 is disposed on the second base 215, and the second positioning mechanism 8 is disposed on the second base 215, for positioning of the eccentric block assembly 1. When the eccentric block assembly 1 is placed and mounted in the second placement area 213, the position of the eccentric block assembly 1 is positioned by the second positioning mechanism 8, effectively preventing axial and radial movement of the eccentric block assembly 1. It is ensured that the eccentric block assembly 1 is placed stably, then the eccentric block assembly 1 and the working member 400 do not slide or move during the grinding process.

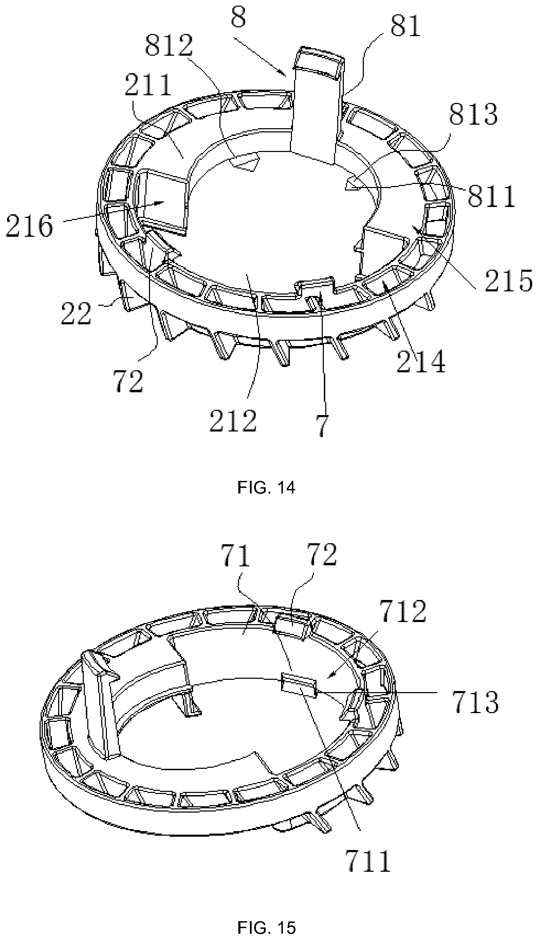

According to an embodiment of the present invention, as shown in FIGS. 13 and 15, the first positioning mechanism 7 includes a first support assembly 71 and an first clamping assembly 72, and the first support assembly 71 is disposed at a lower portion of the first base 214. the clamping assembly 72 is disposed on the upper portion of the first base 214, to jointly realize the positioning of the weight structure 3, and the present invention mainly restricts the movement of the weight structure 3 in the axial direction. And the first support assembly 71 is configured to support the weight structure 3, that is, the lower end of the weight structure 3 is placed on the first support assembly 71, and the support is realized by the first support assembly 71, thereby effectively preventing the weight structure 3 from moving in the direction of gravity. The first clamping assembly 72 is used to clamp the upper portion of the weight structure 3, effectively preventing the weight structure 3 from adversely affecting the grinding of the workpiece components, such as the sanding structure, as it moves during rotation.

According to an embodiment of the present invention, as shown in FIG. 13, the first support assembly 71, as one embodiment of the present invention, includes at least one support portion one 711,and the support portion one 711 is formed by a protrusion structure extending from the inner wall of the first base 214 in a radial direction. The space enclosed by the platform structure is sufficient for the partial structure of the lower end of the weight structure 3, to ensure that the weight structure 3 does not slip. In this embodiment, the support portion one 711 may be a ring formed continuously, and forming an inner circumference around the inner wall of the lower portion of the first base 214, or may be a partial structure forming an inner circumference around the inner wall of the lower portion of the first base 214. And each of the support portion one 711 has a disconnected structure, that is, the partially or completely adjacent support portions 711 are disconnected, and the supporting of the weight structure 3 can be realized .When the support portion one 711 is disposed to be disconnected, that is, an opening formed at a break between the support portions 711, Wherein the opening corresponds to the position of the upper first clamping assembly 72. When the disconnection is set, that is, the opening formed at the break between the support portions 711 corresponds to the position of the upper first clamp assembly 72, and the opening portion is mainly used when the mounting structure 21 is an integral structure. The whole structure of the mounting structure 21 is facilitated, and the first supporting component 71 and the mounting structure 21 of the first clamping component 72 and the mounting base 211 are integrated structures, thereby facilitating the overall installation of the power tool and greatly providing production efficiency.

According to an embodiment of the present invention, as shown in FIG. 15, the first support assembly 71 as the second embodiment of the present invention , includes at least one support member one 712, and the support member one 712 is a separate structure, and is mainly detachably connected to the lower portion of the weight structure 3 and/or the first base 214 to support the weight structure 3. In this embodiment, the support member one 712 can be disposed to completely wrap the bottom of the mounting base 211, or the bottom of the weight structure 3, and the support member one 712 is provided with a connecting hole or the like for facilitating connection with the weight structure 3. Alternatively, the support structure of the weight structure 3 can be realized integrally with the weight structure 3 and the mounting base 211, and all of them are within the protection scope of the embodiment.

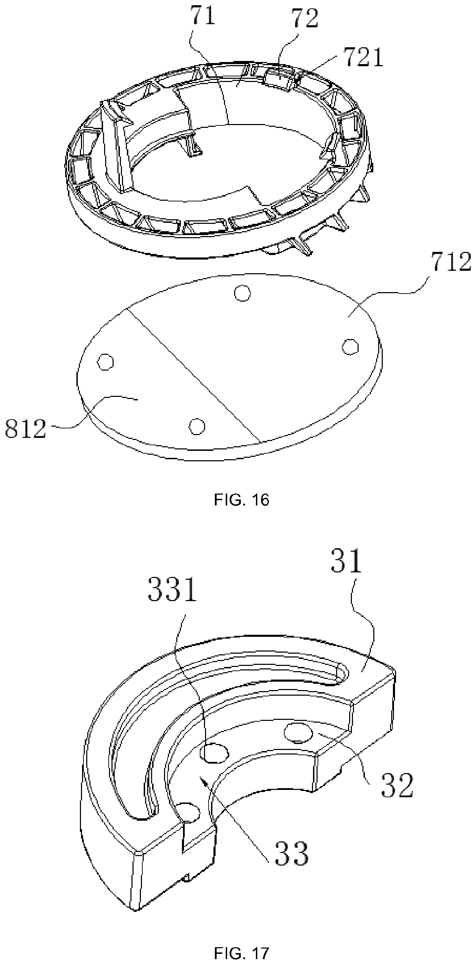

According to an embodiment of the present invention, as shown in FIG. 16, the first support assembly 71, as a third embodiment of the present invention, includes at least one support member one 712, and the support member one 712 can be continuously and/or disconnected. The support member one 712 includes a connecting portion 713 and a support portion one 711, and a protruding structure in which the connecting portion 713 extends from the lower end surface of the first base 214 in the axial direction, the protrusion structure 711 extending from the connecting portion 713 in a radial direction to form a protruding structure. The protruding structures together constitute the support member 712 of the present embodiment, for supporting the weight structure 3. In this embodiment, the support portion 711 may be a circle formed continuously and surrounding the lower portion of the first base 214, and the support portion 711 may also be a partial structure formed around the lower portion of the first base 214. And each of the support portions 711 has a disconnected structure, that is, some or all of the adjacent support portions 711 are disconnected, and the support for the weight structure 3 can be realized. In addition, the support member one 712 may also be independent members, that is, the support members 712 disposed at the lower portion of the first base 214 are spaced apart from the lower portion of the first base 214, and may be equally spaced or may be unequal spacing setting, may be set one or more, and the like is within the protection scope of the embodiment.

According to an embodiment of the present invention, as shown in FIG. 13, the first clamping assembly 72 is configured to cooperate with the first support assembly 71, and under the support of the first support assembly 71 at the lower portion of the weight structure 3.The upper portion of the weight structure 3 is clamped by the first clamping assembly 72, to achieve the axial direction restriction of the weight structure 3, to ensure the stability of the weight structure 3 installation. The first clamping assembly 72 of the present embodiment, includes at least one clamping member one 721, and the clamping member721 can be continuously and/or disconnected. The clamping member one 721 includes an first connecting portion 722 and an first clamping portion 723, wherein the first connecting portion 722 extends from the upper end surface of the first base 214 to form a protruding structure, and the first clamping portion 723 is The protrusion structure formed by the radial extension of the first connecting portion 722 together forms the holding member 721 of the present embodiment for holding the weight structure 3 to realize the positioning of the weight structure 3.wherein the first connecting portion 722 extends from the upper end surface of the first base 214 to form a protruding structure, and the first clamping portion 723 is formed by a protruding structure extending from the first connecting portion 722 in a radial direction. The clamping member one 721 of the present embodiment is formed for clamping the weight structure 3, to realize the positioning of the weight structure 3. The clamping surface of the first clamping portion 723 abuts against the upper end surface of the weight structure 3, and effectively prevents the upper end of the weight structure 3 from loosening and moving in the axial direction. In this embodiment, the first clamping portion 723 may be a ring formed continuously and surrounding the upper portion of the first base 214, or may be a partial structure formed around the upper portion of the first base 214. And each of the first clamping portions 723 has a breaking structure, that is, some or all of the adjacent first clamping portions 723 are disconnected, and the clamping and positioning of the weight structure 3 can be realized. In addition, the clamping member one 721 can also be a separate component, that is, a clamping member one 721 disposed on the upper portion of the first base 214, is disposed at an upper portion of the first base 214, and can be equally spaced. It may be unequal spacing setting, one may be set, or multiple may be set, and the like is within the protection scope of the embodiment.

According to an embodiment of the invention, the weight structure 3 is placed in the first placement area 212 of the mounting base 211, the first placement area 212 is composed of a plurality of positioning surfaces, etc. In this embodiment, the first placement area 212 of supporting the weight structure 3, is composed of a region enclosed by the joint portion 216, the first clamping portion 723, the first base 214, and the support portion one 711. And the bottom of the weight structure 3 abuts against the support surface formed by the support portion one 711, and the side one side of the portion abuts against the joint surface formed by the joint portion 216, and the other side faces are defined by the end surface formed by the inner wall of the first base 214, and the upper end surface is clamped by the first clamp portion 723, and is clamped with the first clamp The clamping surface formed by the holding portion 723 abuts, Most of the structure of the weight structure 3 is located in the space formed in the first base 214, thereby realizing the installation and placement of the weight structure 3 of the present embodiment, and ensuring the mounting stability of the weight structure 3. In this embodiment, the radial direction of the weight structure 3 is restricted by the inner wall of the first base 214 and the joint surface of the joint portion 216, and the axial direction is restricted by the support portion one 711 and the first clamping portion 723, thereby, the installation and positioning of the weight structure 3 is achieved.

According to an embodiment of the invention, the second positioning mechanism 8 includes a second support assembly 81 and a second clamping assembly 82, the second support assembly 81 being disposed at a lower portion of the second base 215, the second clamping assembly 82 is disposed at an upper portion of the second base 215 to collectively realize positioning of the eccentric block assembly 1. In the present invention, the movement of the eccentric block assembly 1 in the axial direction is mainly limited, wherein the second support assembly 81 is for supporting the eccentric block assembly 1, that is, the lower end of the eccentric block assembly 1 is placed on the second support assembly 81 through the second support. The assembly 81 realizes support to effectively prevent the eccentric block assembly 1 from moving in the direction of gravity, and the second clamping assembly 82 is used for clamping the upper portion of the eccentric block assembly 1, effectively preventing the eccentric block assembly 1 from moving toward the workpiece member as it moves during rotation, and the polishing of the sanding structure has a negative impact.

According to an embodiment of the present invention, as shown in FIG. 12, the second support assembly 81, as one embodiment of the present invention, includes at least a support portion two 811, and the support portion two 811 is radially from the inner wall of the second base 215. The protruding structure formed by the extension, the placement space of the protruding structure is sufficient for the partial structure of the lower end of the eccentric block assembly 1 , to ensure that the eccentric block assembly 1 does not slip. In this embodiment, the supporting portion two 811 can be continuous. A ring formed and formed around the inner wall of the lower portion of the second base 215 , may also be a partial structure , forming an inner circumference around the inner wall of the lower portion of the second base 215, and each of the support portions 811 has a disconnected structure. That is, a portion or the entire adjacent support portions 811 are disconnected, and the support of the eccentric block assembly 1 can be realized. When the disconnection is set, that is, the opening formed at the break between the support portions 811 corresponds to the position of the upper second clamp assembly 82, and the opening portion is mainly used when the mounting structure 21 is an integral structure. The mounting structure 21 is facilitated to be integrally molded, and the second supporting component 81 and the second clamping component 82 and the mounting base 211 are integrally mounted structure 21, thereby facilitating the overall installation of the power tool and greatly providing production efficiency.

According to an embodiment of the present invention, as shown in FIG. 14, the second support assembly 81 is a second embodiment of the present invention, including at least one support member two 812, and the support member two 812 is a separate structure. Mainly connected to the lower part of the eccentric block assembly 1 and/or the second base 215 to support the eccentric block assembly 1. In this embodiment, the support member two 812 can be disposed to completely wrap the bottom of the mounting base 211, or the bottom of the eccentric block assembly 1, and the support member two 812 is provided with a connecting hole or the like on the support member two 812, for facilitating connection with the eccentric block assembly 1. Alternatively, the eccentric block assembly 1 and the mounting base 211 are integrally connected to each other, then the support of the eccentric block assembly 1 can be realized, which is within the protection scope of the embodiment.

According to an embodiment of the present invention, as shown in FIG. 16, the second support assembly 81 is a third embodiment of the present invention, including at least one support member two 812, and the support members 812 can be continuously and/or disconnected. The support member two 812 includes a connecting portion two 813 and a supporting portion two 811. The connecting portion two 813 has a protruding structure extending from the lower end surface of the second base 215 in the axial direction, and the supporting portion two 811 has a diameter along the connecting portion two 813. The protrusion structure formed by the extension forms the support member two 812 of the present embodiment for supporting the eccentric block assembly 1. The placement space of the support portion two 811 is sufficient for the partial structure of the lower end of the eccentric block assembly 1 to ensure that the eccentric block assembly 1 does not slip. In this embodiment, the support portion two 811 may be a ring formed continuously and surrounding the lower portion of the second base 215, or may be a partial structure formed around the lower portion of the second base 215, and each of the support portions 811 has The disconnecting structure, that is, the partial or full adjacent supporting portions 811 are disconnected, and the supporting of the eccentric block assembly 1 can be realized; in addition, the supporting members 812 can also be independent members, that is, The support members 812 disposed at the lower portion of the second base 215 are disposed at intervals in the lower portion of the second base 215, and may be disposed at equal intervals, or may be unequally spaced, and may be provided one or more. And so on within the scope of protection of this embodiment.

According to an embodiment of the present invention, as shown in FIG. 12, the second clamping assembly 82 is configured to cooperate with the second supporting assembly 81. The lower portion of the eccentric block assembly 1 is supported by the second support assembly 81, and the upper portion of the eccentric block assembly 1 is clamped by the second clamping assembly 82, to achieve the axial direction of the eccentric block assembly 1, and ensure the stability of the installation of the eccentric block assembly 1. The second clamping assembly 82 of the present embodiment, includes at least a clamping member two, and the clamping members two can be continuously and/or disconnected. The clamping member two includes a second connecting portion 821 and a second clamping portion 822.,and a protrusion structure in which the second connection portion 821 extends in the axial direction from the upper end surface of the second base 215, and a protrusion structure formed by the second clamping portion 822 extending from the second connection portion 821 in the radial direction forms a common The clamping member two of the embodiment is used for clamping the eccentric block assembly 1, to realize the positioning of the eccentric block assembly 1. The clamping surface of the clamping portion two abuts against the upper end surface of the eccentric block assembly 1, to effectively prevent the upper end of the eccentric block assembly 1 from loosening and moving in the axial direction. In the embodiment, the clamping portion two may be continuously formed and surrounded. A ring of the upper portion of the second base 215 may also be a partial structure formed around the upper portion of the second base 215, and each of the clamping portions has a breaking structure between them, that is, part or all of the adjacent clamping portions. The disconnection between the two can achieve the clamping and positioning of the eccentric block assembly 1. In addition, the clamping members 2 may also be independent members. That is, the clamping members 2 disposed on the upper portion of the second base 215 are spaced apart from the upper portion of the second base 215, and may be equally spaced or may be The unequal spacing setting may be set one or more, and the like is within the protection scope of the embodiment.

According to an embodiment of the present invention, as shown in FIGS. 3, 5, 20 and 21, as an first embodiment of the eccentric block assembly 1, the eccentric block assembly 1 is placed in the second placement area 213 of the mounting base 211, which is composed of a positioning surface, etc. In this embodiment, the second placement area 213 of the eccentric block assembly 1, is composed of a region enclosed by the second clamping portion 822, the second base 215 and the support portion two 811, and the bottom of the eccentric block assembly 1 abuts. On the support surface formed by the support portion two 811, the side surface of the side portion is restricted by the end surface formed by the inner wall of the second base 215, and the upper end surface is clamped by the second clamping portion 822, and the second clamping portion The clamping surface formed by the 822 abuts, and most of the structure of the eccentric block assembly 1 is located in the space formed in the second base 215, thereby realizing the installation and placement of the eccentric block assembly 1 of the embodiment, and ensuring the installation of the eccentric block assembly 1. stability. In this embodiment, the radial direction of the eccentric block assembly 1 is restricted by the inner wall of the second base 215, and the axial direction is restricted by the support portion two 811 and the second clamping portion 822. Thereby the mounting and positioning of the eccentric mass assembly 1 is achieved.

According to an embodiment of the present invention, as shown in FIGS. 6 and 7, as a second embodiment of the eccentric block assembly 1, the eccentric block assembly 1 is placed in the second placement area 213 in the mounting base 211, and is composed of a plurality of positioning surfaces, etc. In this embodiment, the second placement area 213 of the eccentric block assembly 1 is composed of a space enclosed by the second clamping portion 822, the second base 215, and the support portion two 811 and the first support portion 23, and the eccentric block The bottom of the assembly 1 abuts on the support end surface formed by the support portion two 811 and the first support portion 23, and the support end surface corresponding to the first support portion 23 disposed on the weight structure 3 is at the same level as the support end surface of the support portion two 811. The eccentric block assembly 1 is placed in a stable manner, and the side surface or the outer circumference of the side portion of the eccentric block assembly 1 is restricted by the end surface formed by the inner wall of the second base 215, and the upper end surface is clamped by the second clamping portion 822, and the clamping surface formed by the second clamping portion 822 abuts, and most of the structure of the eccentric block assembly 1 is located in the space formed in the second base 215, thereby implementing the installation and placement of the eccentric block assembly 1 of the embodiment to ensure eccentricity. Installation stability of the block assembly 1. In this embodiment, the radial direction of the eccentric block assembly 1 is restricted by the inner wall of the second base 215, and the axial direction is restricted by the support portion two 811 and the second clamping portion 822. Thereby the mounting and positioning of the eccentric mass assembly 1 is achieved. When the eccentric block assembly 1 is located on the second base 215 and the weight structure 3, the bearing structure disposed inside the eccentric block assembly 1 also abuts against the support end surface formed by the first support portion 23 of the weight structure 3, and passes through the support end face formed by the first support portion 23 is limited, mainly in the axial direction, preventing the bearing structure from slipping out of the shaft passage two of the lower end of the eccentric block assembly 1. In this embodiment, when the lower end surface of the eccentric mass body 11 and the bottom assembly of the bearing structure are located on the second base 215 and the weight structure 3, the eccentric block assembly 1 and the bearing structure and the working component 400 and the mounting are further determined. Stability of the connection of the base 211, etc. A connecting passage 331 is further disposed on the first supporting portion 23, and a connecting passage 2111 is disposed at a lower portion of the eccentric block assembly 1. When the eccentric block assembly 1 is placed in the second placing region 213, the connecting passage is penetrated through the fastener In a 331 and connecting passage two 111, the eccentric block assembly 1 is integrated with the weight structure 3, so that the weight structure 3 and the eccentric block assembly 1 as a whole are more stable under high speed rotation.

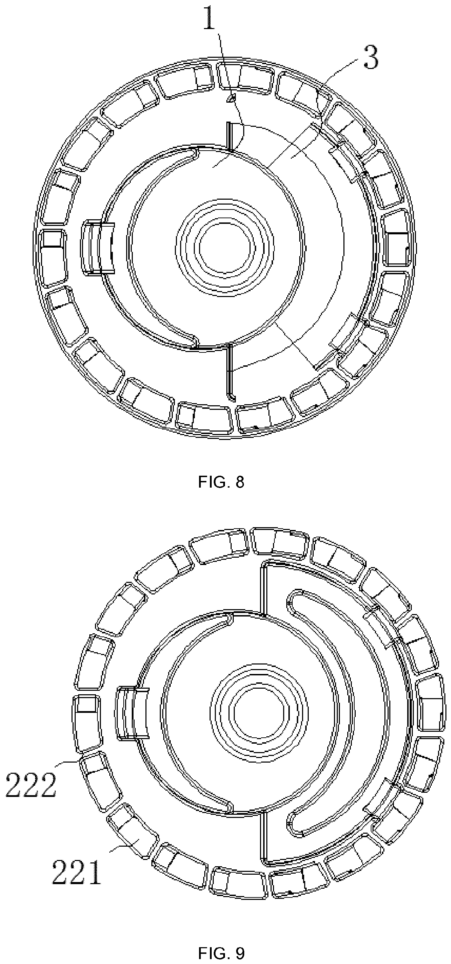

According to the embodiment of the present invention, as shown in FIG. 9, as an first embodiment of the fan structure 22, the fan structure 22 is disposed on the outer end surface of the mounting structure 21, and may be integrally formed with the mounting structure 21, or may be The split structure. When the split structure is provided, the fan structure 22 and the mounting structure 21 are detachably connected by a connecting member, this embodiment is described as an integrated structure. When the integrated structure is installed, the whole structure is installed. Convenience. In the present embodiment, the fan structure 22 includes an fan blade structure 221 and a second flow guiding channel 222, wherein the fan blade structure 221 is distributed along the circumferential direction of the mounting base 211, and is mainly distributed along the outer circumferential direction of the mounting base 211. And a protruding structure formed by extending from the outer end surface of the mounting base 211 in the radial direction is formed under the rotation of the rotating shaft, and the fan blade structure 221 formed by the protruding structures rotates to form a heat dissipating medium, that is, wind, to dissipate heat from the electric tool. Especially the heat dissipation of the working part 400. The heat dissipation medium generated by the rotation of the fan blade structure 221, that is, the wind force, is further transported into the power tool housing through the second flow guiding channel 222, and is transported to the working component 400. This embodiment preferably generates the rotation of the fan blade structure 221. The wind flow direction is conveyed in the direction of the working member 400, that is, from the direction in which the protective cover is disposed toward the working member 400. The second flow guiding channel 222 of this embodiment may be composed of a space formed between adjacent blade structures 221, and with the rotation of the driving mechanism 200 and/or the working component 400 and/or the fan blade structure 221, The airflow or the wind generated by the rotation of the fan blade structure 221 is outputted to the working component 400 through the second flow guiding channel 222, so as to dissipate the heat generated by the power tool, thereby achieving the purpose of heat dissipation, especially for the working component 400. Not only can the service life of the power tool be improved, but also the medium of the working component 400, such as the surface of the automobile, can be well protected, so that the polishing effect is good when the power tool is used as a grinding device.

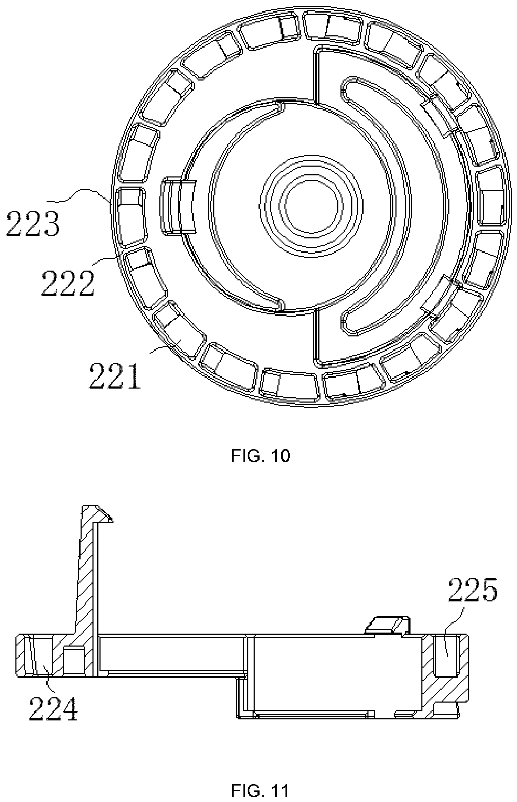

According to an embodiment of the present invention, as shown in FIG. 10, as a second embodiment of the fan structure 22, the fan structure 22 is disposed on the outer end surface of the mounting structure 21, and may be integrally formed with the mounting structure 21, or may be a split structure, but when provided as a split structure, the fan structure 22 and the mounting structure 21 are detachably connected by a connecting member. This embodiment is described by taking an integrated structure as an example. When the integrated structure is provided, the overall structure is convenient to install. In the present embodiment, the fan structure 22 includes an fan blade structure 221 and a second flow guiding channel 222 and an outer ring structure 223. The outer ring structure 223 is an annular structure disposed around the outer end of the fan blade structure 221, and can be used for installation. The pedestal 211 acts as a reinforcement, and further acts to concentrate the flow of the airflow generated by the fan blade structure 221, and the flow guiding effect is better; the fan blade structure 221 of the present embodiment is distributed along the circumferential direction of the mounting base 211, and is mainly distributed along the outer circumferential direction of the mounting base 211, and a protrusion structure extending from the outer end surface of the mounting base 211 in the radial direction is formed. Under the rotation of the rotating shaft, the fan blade structure 221 formed by the protruding structures rotates to constitute a heat dissipating medium, that is, wind, heat dissipation of the power tool, especially the heat dissipation of the working member 400, The heat dissipation medium generated by the rotation of the fan blade structure 221, that is, the wind force, is further transported into the power tool housing through the second flow guiding channel 222, and is transported to the working component 400. This embodiment preferably generates the rotation of the fan blade structure 221. The wind flow direction is conveyed in the direction of the working member 400, that is, from the direction in which the protective cover is disposed toward the working member 400. The second guiding channel 222 of the present embodiment may be composed of a space enclosed by the adjacent fan blade structure 221 and the outer ring structure 223, and with the driving mechanism 200 and/or the working component 400 and/or the wind The rotation of the leaf structure 221, the air flow or the wind generated by the rotation of the fan blade structure 221, is output to the working member 400 through the second flow guiding passage 222, thereby realizing the heat generated by the electric tool to achieve the purpose of heat dissipation, especially The heat dissipation of the working component 400 not only improves the service life of the power tool, but also protects the medium of the working component 400, such as the surface of the automobile, so that the power tool is polished when used as a grinding device. The effect is well good.

According to an embodiment of the present invention, as shown in FIG. 11, the fan blade structure 221 includes blade one 224 and blade two 225, wherein the length direction of the blade one 224 is disposed along the outer end surface of the first pedestal 214. That is, on the outer end surface of the first pedestal 214, the blade 224 substantially fills the outer end surface of the first pedestal 214. The longitudinal direction of the blade 225 is disposed along the outer end surface of the second pedestal 215, that is, outside the second pedestal 215. On the end surface, the blade two 225 substantially fills the outer end surface of the second base 215, so as shown in the figure, the blade the length of one 224 is slightly less than the length of the blade two 225. The lengths of the blade one 224 and the blade two 225 of the present embodiment are not limited to the description of the embodiment of the present invention, and other structures are within the scope of the present invention. In order to further improve the heat dissipation effect, the protrusion structure of the blade one 224 and the blade two 225 extending from the end surface of the mounting base 211 in this embodiment is not parallel with the axial direction of the mounting base 211, and the blade is 224 from the positional view. An angle A is formed with the first pedestal 214, and an angle A is formed between the blade two 225 and the second pedestal 215. In this embodiment, the end surface of the blade one 224 may be arranged in a planar structure. To further improve the heat dissipation effect, the end surface, that is, the outer surface may also be provided with a curved structure, that is, other structures capable of improving wind power or airflow are provided on the end surface thereof. Of course, it can also be set to other irregular planar structures, which are all within the protection scope of the embodiment; Similarly, the end surface of the blade two 225 can be arranged in a planar structure. To further improve the heat dissipation effect, the end surface, that is, the outer surface can also be provided with a curved surface structure, that is, other structures for improving wind power or air flow are provided on the end surface thereof, of course, It can be set to other irregular planar structures, all within the scope of protection of this embodiment. In the present embodiment, when the blade one 224 is disposed on the outer circumference or the end surface of the first pedestal 214, the adjacent blades are also disposed to be equidistantly distributed, or may be disposed as unequal distance distribution, and the preferred scheme is set to be equidistant. The structure is intended to be more uniform in the flow guiding or airflow guiding. When the unequal distance structure is arranged, the fan blade can be arranged on the blade one 224 or the first base 214 to provide other auxiliary airflow circulation structures. The force of the flow of the structure 221, which in turn enhances or enhances or better results in better heat dissipation, provides better conditions for heat dissipation of the working component 400.

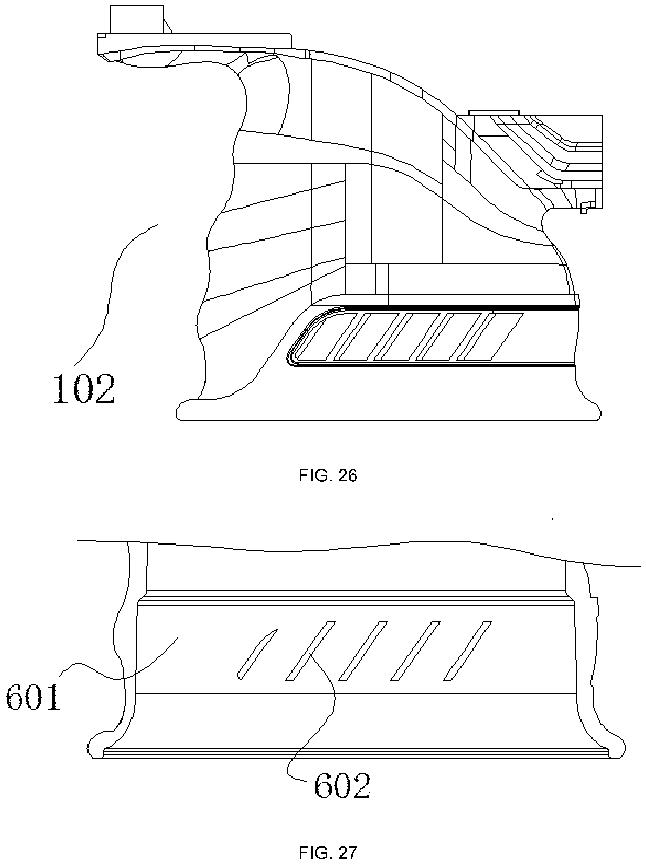

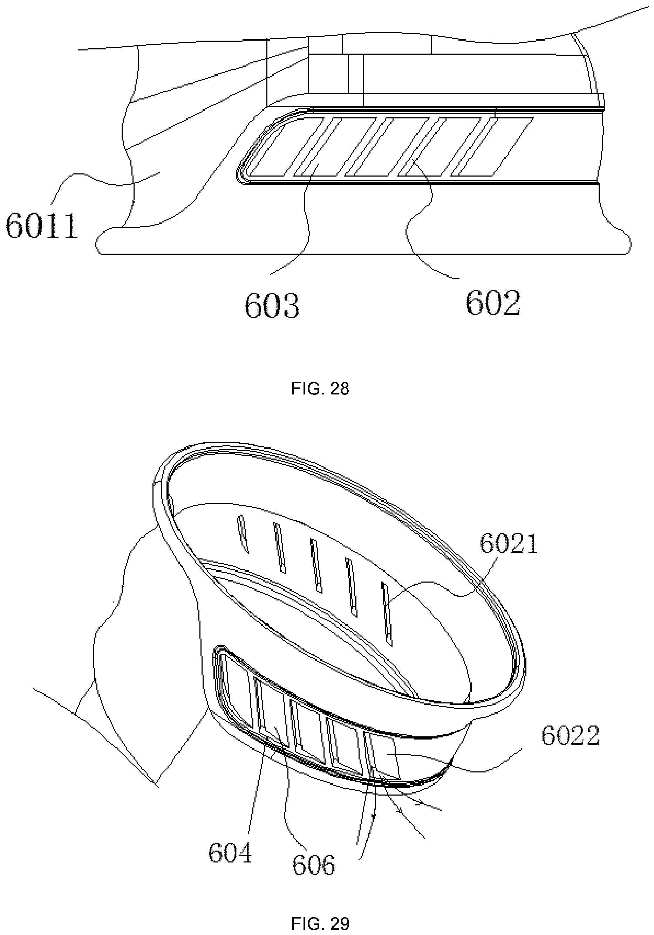

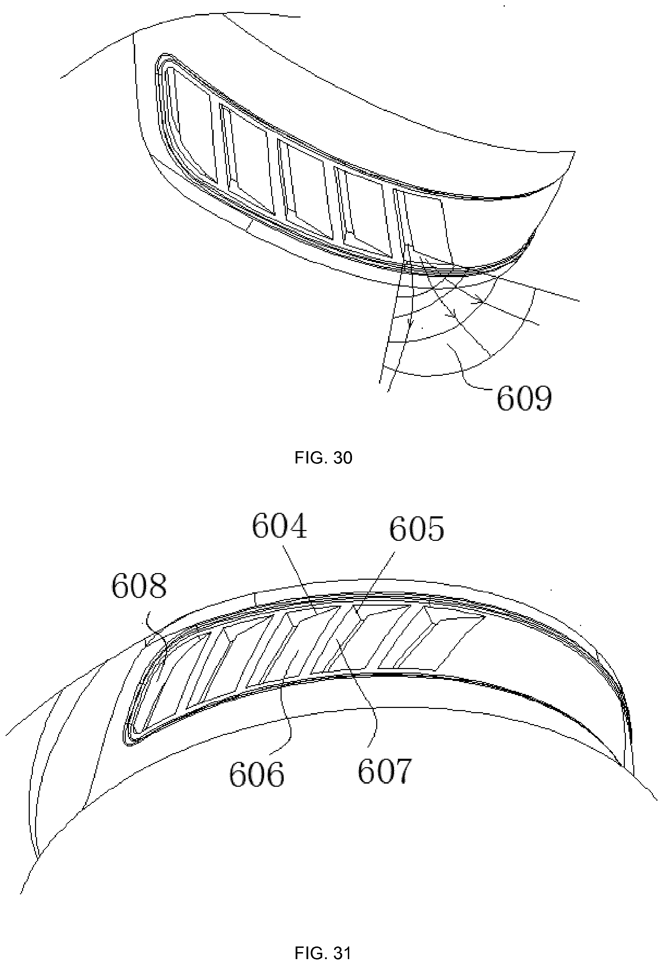

According to an embodiment of the present invention, as shown in FIG. 26-31, a flow guiding device 600 is used for guiding the heat dissipation during the heat dissipation of the structure, and the heat generated by the working component or the power tool in the working process in the present embodiment is mainly passed. The heat dissipating mechanism 700 performs heat dissipation, and the heat guiding device 600 of the present embodiment mainly functions as a diversion function by deriving heat from the workpiece or the inside of the housing or the device or any structure through the flow guiding device 600 of the embodiment. It is equivalent to the circulation channel when heat is dissipated. The flow guiding device 600 of the embodiment includes a flow guiding member 601 and a first guiding channel 602 disposed on the flow guiding member 601. The first guiding channel 602 can be disposed on the flow guiding member 601 in a circumferential direction. Alternatively, a plurality of corresponding heat dissipation regions are disposed in the set heat dissipation area, or a plurality of heat dissipation regions are disposed at intervals, and the first flow guiding channel 602 is radially disposed in the heat dissipation region, or the first guiding channel 601 is disposed on the flow guiding member 601. The flow guiding channels 602 are symmetrically disposed and are within the scope of the present invention. In this embodiment, the flow guiding path 609 of the first guiding channel 602 is disposed at an angle with the flow guiding member 601, that is, the flow direction of the heat conducted from the first guiding channel 602 is constant with the flow guiding member 601. The angle is at least not perpendicular to the surface or the end surface of the flow guiding member 601, and the flow guiding path 609 formed in the flow direction and the surface or the end surface of the flow guiding member 601 are disposed at an angle to be emitted from the workpiece or the device. The flow of heat or the flow path 609 is circulated away from the operator, that is, it does not directly conduct heat to the operator, and at least does not cause heat to the operator, thereby causing injury to the operator, by the embodiment. The arrangement of the first flow guiding channel 602, when the object or the workpiece or the tool is dissipating heat, the operator can well prevent the hot gas pair from being blown to the operator by holding the tool or the device or the like.

According to an embodiment of the invention, the flow guiding member 601 includes a deflector body 6011 and a baffle 603, wherein the baffle 603 is spaced apart on the deflector body 6011, and the deflector 601 can be used as a stand-alone unit. A certain structure, that is, a part or a partial structure of the structure, is within the scope of the embodiment. As shown in the figure, the flow guide 601 and the second housing assembly 102 have the same structure, or the partial structure of the flow guide 601 disposed on the second housing assembly 102 is illustrated as an example. When the flow guiding device 600 is disposed on the power tool, when disposed on the second housing assembly 102 as shown, the flow guiding device 600 is mainly used for heat generated during the rotation of the power tool or when the workpiece component is in operation. The generated heat dissipates heat, and the heat in the first housing assembly 101 and the second housing assembly 102 of the power tool is dissipated into the external space. By the flow guiding device 600 of the embodiment, the heat can be performed more quickly. Dissipating, which reduces the temperature of the tool, can greatly extend the life of the tool. In this embodiment, the baffle 603 is disposed in plurality, and the baffle 603 is disposed on the baffle body 6011 at intervals, and a channel is formed between the adjacent baffles 603, which constitutes the first guide of the present invention. The flow channel 602 is formed with a channel between the two outer guiding fins 603 and the deflector body 6011, and also constitutes the first guiding channel 602 of the present invention. Therefore, the first guiding channel 602 of the embodiment passes the diversion flow. The sheet 603 is disposed in a positional relationship with the deflector body 6011. The baffle 603 of this embodiment may be disposed in an equally spaced structure or in an unequal pitch setting, and is within the scope of the present embodiment.

According to an embodiment of the invention, the end of the baffle 603 is provided with a first joint 604 and/or a second joint 605 and passes through the first joint 604 and/or the second joint 605 and the deflector body. a first end surface 606 and a second end surface 607 are disposed on the body of the guide vane 603. The first end surface 606 is an end surface disposed on the upper portion of the body of the baffle 603. The first end surface 606 of the embodiment is combined by the first end. The space formed by the portion 604 is composed; The second end surface 607 is another end surface disposed on the upper portion of the body of the baffle 603, and the second end surface 607 is composed of a space enclosed by the second joint portion 605, and the first end surface 606 and the second end surface 607 are oppositely disposed. Since the first joint portion 604 and the second joint portion 605 of the embodiment are disposed at an angle with the deflector body 6011, that is, at a certain angle, the first end surface 606 and the second end surface 607 are also formed and diverted. The body 6011 is disposed at an angle, at least not parallel or perpendicular to the end face of the deflector body 6011 or the joint face 608. In the present embodiment, the first guiding channel 602 includes a first channel 6021 and a second channel 6022, wherein the first channel 6021 is an opening portion disposed on the deflector body 6011, and the opening portion can be disposed with a certain depth. a structure for facilitating heat concentration to be led out from the opening. The second passage 6022 is formed by the joint surface 608 of the guide body 6011 and the space between the first end surface 606 and the second end surface 607 of the baffle 603, and is convenient for heat to be quickly taken from the chamber or the housing or the tool. Exported inside, The flow guiding path 609 formed by the first channel 6021 and the second channel 6022 of the present embodiment is gradually increased, that is, the guiding path 609 formed by the first channel 6021 and the second channel 6022, and the starting end is from the first channel 6021. The terminal from the beginning to the second channel 6022 is gradually increased, so that the heat-conducting flow path 609 formed through the first channel 6021 and the second channel 6022 increases with the size of the flow guiding path 609 or The area of the flow path 609 is increased, or the volume of the flow guiding path 609 is increased. In general, the size of the flow guiding path 609 is gradually increased and can be quickly exported to the external environment. In this embodiment, the flow guiding path 609 formed by the first channel 6021 can be set to be equidistant. Once the heat enters the second channel 6022, the guiding path 609 formed by the second channel 6022 is gradually increased to facilitate rapid heat dissipation. Distribute.

According to an embodiment of the present invention, a heat dissipating mechanism 700 is also disclosed for dissipating heat of a workpiece, such as heat dissipation for the internal structure of the power tool and the heat generated during operation of the workpiece component, for the present embodiment. For example, when the power tool is taken as an example, the heat dissipation mechanism 700 of the present embodiment is mainly used for heat dissipation of the heat generated by the power tool during operation. In the present embodiment, the heat dissipation mechanism 700 includes a second housing assembly 102, a heat dissipation assembly 2 (shown as being disposed on the eccentric block assembly), and a flow guiding device 600, wherein the heat dissipation assembly is disposed within the second housing assembly 102. The flow guiding device 600 is disposed on the second housing assembly 102, and may be covered on the second housing assembly 102, or may be a partial or partial structure disposed on the second housing assembly 102.When the power tool is in operation, the heat generated by the internal component during the rotation process and the heat generated by the working component under high-speed operation are dissipated by the heat dissipation component of the embodiment, and are exported to the outside through the flow guiding device 600 of the embodiment. In the space, the heat dissipation assembly 2 of the present embodiment is disposed as in the above embodiment.

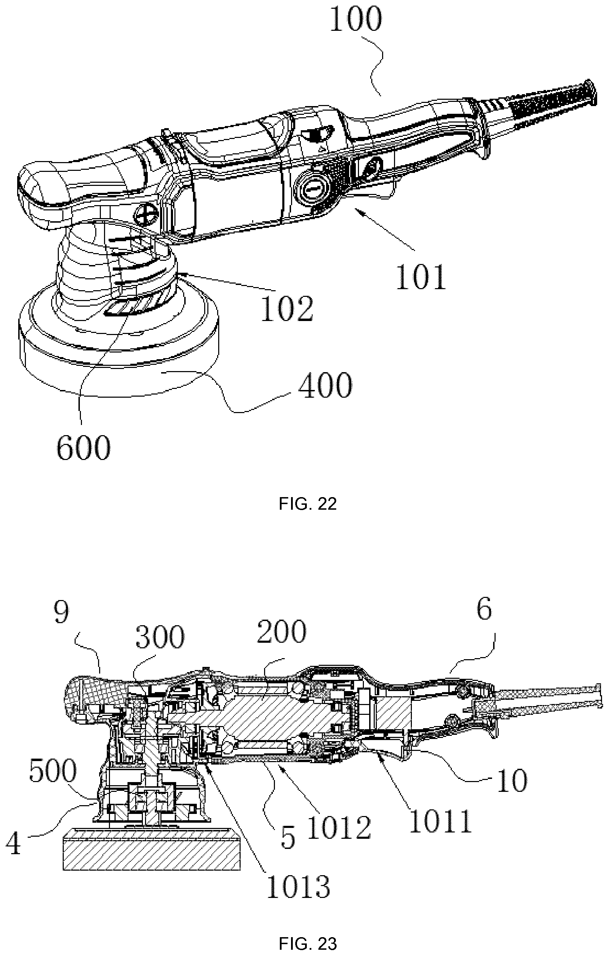

As shown in Figure 22-25, As an embodiment of the present invention, a power tool can be applied to sanding or polishing, etc., depending on the nature of the product, corresponding to the above structure, especially the eccentric mechanism 500, which can be used in polishing equipment or polishing equipment, and even other The tool for driving the rotation by the drive mechanism 200 is applied to the eccentric mechanism 500 of the present invention. The power tool of the present invention comprises a housing mechanism 100, a drive mechanism 200 located in the housing mechanism 100, an output mechanism 300 coupled to the drive mechanism 200, and a working component 400. When the power tool of the present invention is used as a polishing apparatus, the working component 400 may refer to a polishing component for polishing a surface of a workpiece such as a car. When the power tool of the present invention is used as a grinding device, the working component 400 may refer to a sanding component for performing a surface such as a car or the like. Polishing, In the following description of the embodiments of the present invention, the grinding device is taken as an example for description. Others, such as a polishing device, may refer to the technical configuration of the embodiment of the present invention, and the specific structural settings such as the eccentric mechanism 500 may be adjusted according to the application of the power tool. All are within the scope of protection of the present invention. The driving mechanism 200 in the embodiment of the present invention may be referred to as a motor or other components as long as it can provide power, and is not limited to a motor as a power source. The present invention uses a grinding device as an example to illustrate that the corresponding working component 400 is provided. In order to sand the parts, the surface of the workpiece such as a car can be polished. The output mechanism 300 of the present invention is mainly connected to the driving mechanism 200 for guiding the power source of the driving mechanism 200, and providing the driving force to the working member 400 to realize the operation of the working member 400. The output mechanism 300 of the present invention may include, for example, a transmission mechanism such as a gear, a transmission shaft that outputs power to the working member 400, and an eccentric mechanism 500. One end of the transmission shaft is connected to a transmission mechanism such as a gear, and the other end is connected to the eccentric mechanism 500, and the power output is driven to drive the rotation of the eccentric mechanism 500. The working member 400 is rotated by the eccentric mechanism 500 to perform grinding of a medium such as a workpiece.

According to an embodiment of the present invention, the housing mechanism 100 can be used on most products for wrapping internal structures, on the one hand, to protect the internal structure from damage, and on the other hand, to protect against dust and rain. Thereby increasing the service life of the active product. In the present embodiment, the housing mechanism 100 is preferably used in the stomach of a power tool for enclosing and protecting the structure included in the power tool, such as the drive mechanism 200, the output mechanism 300, the transmission mechanism, and various connection mechanisms. In the present embodiment, the housing mechanism 100 includes an first housing assembly 101 and a second housing assembly 102, both of which are used to wrap the internal structure. As shown, the first housing assembly 101 is disposed laterally with respect to the direction of placement, corresponding to the second the outer casing assembly 102 is disposed longitudinally, and together with the first outer casing assembly 101, constitutes a housing mechanism 100 of various power tools. The angle formed between the first outer casing assembly 101 and the second outer casing assembly 102 is not limited to being completely vertical, ie, 90 degrees. The arrangement can form a corresponding angle, and the positional relationship after the connection between the installations can be set to an angle required by the angle, and the first outer casing assembly 101 is used for wrapping the internal structure and the like. In this embodiment, when the housing mechanism 100 is used on a power tool, the inner component wrapped by the first outer casing assembly 101 is preferably a driving mechanism 200, an output mechanism 300, a transmission mechanism, etc., and the inner component of the second outer casing assembly 102 is preferably Is the output mechanism 300 or the transmission mechanism, etc., when the power tool of the embodiment is, for example, a grinding device, the internal component wrapped by the corresponding first housing assembly 101 is a drive mechanism 200 such as a motor, and the output mechanism 300 is a gear transmission structure, etc. The inner member wrapped by the second outer casing assembly 102 is an eccentric mechanism or the like, and a sanding member is attached to the free end of the second outer casing assembly 102 for sanding a medium such as a car surface. The first housing assembly 101 of the embodiment is provided with an first holding device 4, and when the user operates the power tool, the first holding device 4 can be hand-held to facilitate the holding of the tool for work, so as to further ensure the user is in use. When the tool is held, it is more convenient to hold the tool, and it is not easy to be slipped. The first holding device 4 is provided with an uneven structure, which is convenient for the user to hold; similarly, the second housing assembly 102 of the embodiment is provided with a second holding device 5, and when the user operates the power tool, the second holding device 5 can be hand-held to facilitate the holding of the tool for further work. When the user is in use, it is more convenient to hold the tool, and it is not easy to slip. The second holding device 5 is provided with an uneven structure, which is convenient for the user to hold; Therefore, the power tool provided with the outer casing mechanism of the present invention, when the operator performs close-range grinding, for example, when working on an object of a horizontal plane or a similar horizontal plane, the control structure 10 is held by one hand to adjust the gear position of the tool, or Open or close, when held in the set open state, and through the housing one1011 of the outer end of the control structure 10, that is, the third holding device 6 of the embodiment, the other hand can be gripped by the embodiment The second holding device 5 performs a grinding operation on the surface of the automobile or the like, and the second holding device 5 is disposed on the second housing assembly 102, which is just opposite to the third holding device 6, and is also located in the fourth grip. At the lower position of the holding device 9, the tool is held by both hands for work, and the stability is good. When performing long-distance grinding, such as when the grinding position is substantially perpendicular to the horizontal plane, when the control structure 10 is opened, and through the housing one1011 of the outer end of the hand-held control structure 10, that is, the third holding device 6 of the present embodiment The other hand can perform the grinding and the like by holding the first holding device 4 of the embodiment, and the first holding device 4 is disposed on the first housing assembly and can be disposed adjacent to the third holding device 6 The position, such as the housing one1011, the housing two1012 and the housing three1013, is convenient for the operator to apply force, and is more labor-saving when operating the electric tool, and the holding power tool is more stable, and the corresponding work effect is more effective. Excellent, such as polished flat or curved surface is more flat and smoother.

According to an embodiment of the present invention, as shown in FIG. 23, the first housing assembly includes a housing one1011, a housing two1012, and a housing three1013, wherein the housing one1011, the housing two1012, and the housing three1013 are in turn The sequential connection, that is, one end of the housing two1012 is connected to the housing one1011, and the other end is connected to the housing three1013 to form an first housing assembly for wrapping the internal components such as the driving mechanism 200 and the output mechanism 300. The second housing assembly 102 of the present embodiment is connected to the housing three1013 and disposed transversely with respect to the first housing assembly. The second housing assembly 102 is longitudinally disposed relative to the first housing assembly, which can be understood as vertical or basic. Set vertically or nearly vertically. In this embodiment, the control structure 10 is disposed on the housing one1011. The control structure 10 is used to switch the working state of the power tool, that is, to turn on or off the power tool. The first holding device 4 of the embodiment can be disposed in the shell. The body 1011 may also be disposed on the housing two1012, or may be disposed on the housing three1013, or simultaneously disposed on the housing one1011, the housing two1012 and the housing three1013, and may be performed as needed. Adapted settings. When the first holding device 4 is disposed on the housing one1011, it is preferably disposed at one end of the housing one1011 connected to the housing two1012, that is, the end adjacent to the housing two1012; when the first holding device 4 When disposed on the housing two1012, it can be arbitrarily arranged along the housing two1012, and one or more can be disposed; When the first holding device 4 is disposed on the housing three1013, it may be arbitrarily arranged along the housing two1012, and one or more may be disposed, and may also be disposed at one end of the housing three1013 connected to the housing two1012. That is, near the end of the housing two1012. In this embodiment, the outer free end of the housing three 1013 is provided with a fourth holding device 9 disposed opposite to the third holding device 6 disposed on the housing one 1011. When the tool is operated, one hand can be used. Holding the third holding device 6, the other hand holding the fourth holding device 9 to operate the tool, The first holding device 4, the second holding device 5, the third holding device 6, and the fourth holding device 9 of the embodiment can be selected and used according to the position of the working medium, for example, when performing fine grinding, The second holding device 5 and the third holding device 6 can be selectively held, one hand grasps the overall structure of the tool by holding the third holding device 6, and then holds the second holding device 5 through the other hand. The force applied to the sanding member of the lower portion of the second holding device 5 by the second holding device 5 can be used to polish the surface of the workpiece, and the force is applied to the second holding device 5, that is, the working member. Grinding parts to better control the work of the working parts, thus polishing the surface of the car more finely; When a certain edge is disposed at an angle to the horizontal plane, for example, when the position where the operator stands is a vertical position, one hand grasps the overall structure of the tool by holding the third holding device 6, and then holds the other hand Holding the first holding device 4 to jointly support the power tool, so that the working part such as the sanding part polishes the surface of the workpiece, the stability is good, and the grinding effect is good; Similarly, when the required working angle or range is performed, the first holding device 4, the second holding device 5, the third holding device 6, and the fourth holding device 9 are selectively combined, when the tool is working., stable holding of the power tool, so that the grinding effect is better.

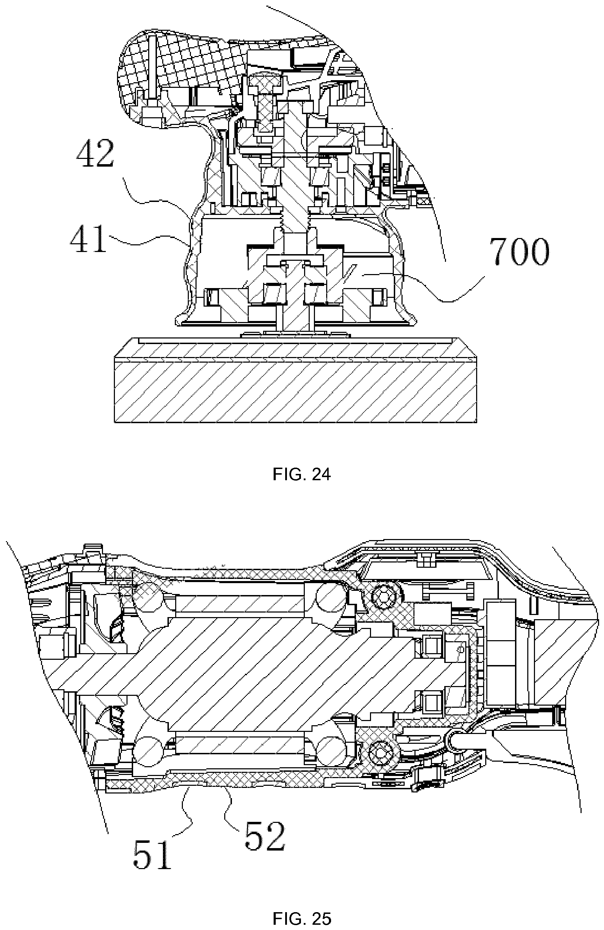

According to an embodiment of the present invention, as shown in FIG. 24, the first holding device 4 of the present embodiment is preferably disposed between the control structure 10 and the second housing assembly 102, the housing one 1011 and/or the housing two1012. And/or the housing three1013, from the positional structure, the fourth holding device 9 is disposed at the leftmost position of the power tool placement position as shown, that is, consists of a part of the housing three 1013, as shown in the figure. For identification, the third holding device 6 is disposed at the rightmost side of the power tool, that is, composed of a part of the housing one 1011, and the first holding device 4 is disposed at the third holding device 6 and the fourth holding device 9. Between and in relative position, it is closer to the third holding device 6. The second holding device 5 of the present embodiment is disposed on the second housing assembly 102. The second holding device 5 is located below the fourth holding device 9 from the positional structure, and similarly, the second holding device 5 is disposed at the free end of the power tool opposite to the fourth holding device 9, so that the holding position of the second holding device 5 and the fourth holding device 9 is more free, and the operation is more convenient, especially the second grip. The position of the holding device 5 is convenient to operate when being held or released. In the position where the second holding device 5 is disposed, the second holding device 5 is disposed on the left side of the first holding device 4, and the control structure 10 and the third holding device 6 of the present embodiment are disposed on the right side. And the first holding device 4 is disposed on the housing one 1011 and/or the housing two 1012 and/or the housing three 1013. In the present embodiment, the first holding device 4 includes a grip portion 41 and an engaging portion 42, wherein the grip portion 41 is adapted to the user's finger, in particular to the operator's finger curvature. In this way, when the operator uses the tool, the grip portion 41 is held by the finger, which is not easy to slip, and the operation tool is more stable during operation. In this embodiment, the grip portion 41 can be disposed in plurality, so that the operator can hold the tool by a plurality of fingers to perform the work. Since the finger has a certain arc or curvature, each grip portion 41 is also Also set to a different concave arc or recessed angle, that is, formed with a relatively horizontal inwardly facing recess to facilitate the grip of one or a few fingers. The connecting portion 42 is used for the connection of the adjacent holding portions 41, and the holding portion 41 is smoothly connected by the connecting portion 42, preferably a circular arc transition connection, and the connecting portion 42 can be set relative to the horizontal plane. The protruding structure, that is, the outer horizontal surface is convexly formed, which is more suitable for the use of the grip portion 41 of the embodiment, and is convenient for the operator to hold.

According to the embodiment of the present invention, on the basis that the grip portion 41 included in the first holding device 4 is disposed in a recessed structure, the first anti-slip structure is also disposed on the grip portion 41, of course, the first anti-slip structure. It is possible to cover all of the grip portion 41 and the joint portion 42, and it is also possible to completely cover the entire first housing assembly, which is within the scope of the present embodiment. The first anti-slip structure is arranged to prevent the finger from sliding when the operator operates, that is, when the finger is located at the grip portion 41 or is held to the engaging portion 42, the friction is increased to further ensure the holding of the electrician's tool. Stability, in the present embodiment, the first anti-slip structure is disposed on the housing one 1011 and/or the housing two1012 and/or the housing three1 013 and covers the first holding device 4. The first anti-slip structure can be configured to The bumps, either arranged in a stripe structure or in a bonded structure, may also be a combination of these structures, or may be non-limiting and within the scope of the present example, and may be used for slip resistance.

According to an embodiment of the present invention, as shown in FIG. 25, it is preferable that the second holding device 5 of the present embodiment is disposed on the second housing assembly 102, as shown, from the position, in the second housing assembly. The outer side of the second housing assembly 102 on the side of the second housing assembly 102 is also located below the fourth holding device 9. The outer space of the second holding device 5 is free space and has no shielding parts. It is convenient for the operator to hold and exit, which makes it easier for the operator to apply force when using the tool and adjust the required strength. In this embodiment, the direction in which the second holding device 5 is used for gripping is disposed in a lateral direction, that is, substantially parallel to the direction of the first housing assembly, when the third holding device 6 is matched with the second holding device 5 When acting, a hand holds the power tool of the embodiment from the upper portion of the housing one 1011 by holding the third holding device 6, and the biasing direction is the same from the first housing assembly. The third holding device 6 has a biasing direction from top to bottom and acts on the housing one 1011 of the power tool, and the other hand holds the second grip from the left side of the second housing assembly 102. The holding device 5 holds the second housing assembly 102, and the biasing direction is to hold the second holding device 5 from left to right with respect to the first housing assembly, that is, the direction of the force is relatively from left to right, and Acting on the second housing assembly 102 of the power tool, by holding the second holding device 5 and the third holding device 6, the direction of the force is held in the up and down and left and right directions to better stably hold the electric motor. tool. In the present embodiment, the second holding device 5 includes a grip portion 51 and an engaging portion 52, wherein the grip portion 51 is adapted to the user's finger, in particular to the operator's finger curvature. In this way, when the operator uses the tool, the grip portion 51 is held by the finger, which is not easy to slip, and the operation tool is more stable. In this embodiment, the grip portion two 51 can be disposed in plurality, so as to match the operator to hold the tool through a plurality of fingers to perform the work. Since the finger has a certain arc or curvature, each grip portion 51 is also set to different concave arc or concave angle, that is, formed with a relatively horizontal inward concave surface to facilitate the holding of one or a few fingers. The connecting portion 22 is used for the connection of the adjacent grip portions 51, and the grip portion 51 is smoothly connected by the connecting portion 52, preferably a circular arc transition connection, and the connecting portion 52 can be set relative to the horizontal plane. The protruding structure, that is, the outer horizontal surface is convexly formed, which is more suitable for the use of the grip portion 51 of the embodiment, and is convenient for the operator to hold.

According to the embodiment of the present invention, on the basis that the grip portion 51 included in the second holding device 5 is provided as a recessed structure, the second anti-slip structure is also provided on the grip portion 51, and of course, the second anti-slip structure can be Covering all of the grip portion two 51 and the engaging portion two 52, it is also possible to completely cover the entire first housing assembly, which is within the scope of the present embodiment. The second anti-slip structure is arranged to prevent the sliding of the finger when the operator operates, that is, when the finger is located at the grip portion 51 or the grip portion 52, the friction is increased to further ensure the holding of the electrician's tool. Stability, in the present embodiment, the second anti-slip structure is disposed on the housing one 1011 and/or the housing two1012 and/or the housing three1013 and covers the second holding device 5. The second anti-slip structure can be configured to The bumps, either arranged in a stripe structure or in a bonded structure, may also be a combination of these structures, or may be non-limiting and within the scope of the present example, and may be used for slip resistance.

Finally, it should be noted that the above embodiments are only used to illustrate the technical solutions of the present invention, and are not limited thereto; although the present invention has been described in detail with reference to the foregoing embodiments, those skilled in the art should understand that The technical solutions described in the foregoing embodiments are modified, or some of the technical features are equivalently replaced; and the modifications or substitutions do not deviate from the scope of the technical solutions of the embodiments of the present invention.

In summary, the above description is only the preferred embodiment of the present invention, and all changes and modifications made by the scope of the present invention should be covered by the present invention.

## Claims

1. An eccentric mechanism, comprising:
an eccentric block assembly;
a weight structure, for balancing the eccentric block assembly while rotating, so that a shaft passage one and a shaft passage two provided on the eccentric block are located on the same axis when the eccentric block assembly is rotated; and
a heat dissipating component, wherein the heat dissipating component is connected with the eccentric block assembly, and is provided with an fan structure comprising a plurality of fan blade structures driven by a drive mechanism, wherein the heat dissipating component rotates synchronously with a working part, to dissipate heat for structural units .

2. The eccentric mechanism according to claim 1, wherein the heat dissipating component further comprises:
a mounting structure, configured to mount the eccentric block assembly and the weight structure, comprising a mounting base, an first placement region disposed on the mounting base and a second placement region disposed on the mounting base, wherein the first placement region is configured to place the weight structure, and the second placement region is configured to place the eccentric block assembly; and
an fan structure, comprising the plurality of the fan blade structures, and the fan structure is disposed on the mounting structure.

3. The eccentric mechanism according to claim 1 or claim 2, wherein the weight structure further comprises:
a counterweight section one;
a counterweight section two, wherein an upper end surface of the counterweight section two is lower than an upper end surface of the counterweight section one, and the upper end surface of the counterweight section two is used for supporting and /or mounting of the eccentric block assembly, and /or
a counterweight section three, is disposed on the eccentric block assembly.

4. The eccentric mechanism according to claim 1 or claim 2, wherein the weight structure comprises:
a counterweight section one;
a counterweight section two, wherein the counterweight section one is formed from a radial extension of the counterweight section two, and the upper end surface of the counterweight section two is used for supporting and /or mounting the eccentric block assembly, and /or
a counterweight section three, is disposed on the eccentric block assembly.

5. The eccentric mechanism according to anyone of claims 2-4, wherein the mounting base further comprises:
an first base, provided with an first positioning mechanism for positioning the weight structure;
a second base, provided with a second positioning mechanism for positioning the eccentric block assembly; and
a joint portion, comprising a juncture of the first base and the second base; and
wherein the first positioning mechanism comprises:
an first support assembly, disposed at a lower portion of the first base, and configured to support the weight structure; and
an first clamping assembly, is disposed at an upper portion of the first base, and configured to clamp the weight structure; and
wherein the second positioning mechanism comprises:
a second support assembly, disposed at a lower portion of the second base, and is configured to support the eccentric block assembly; and
a second clamping assembly, disposed at an upper portion of the second base, and is configured to clamp the eccentric block assembly.

6. The eccentric mechanism according to claim 5, wherein the first support assembly comprises at least a support portion one, comprising a protrusion structure formed by radially extending from an inner wall of the first base, wherein the support portion one can be continuous or disconnected internally; and/or
wherein the second support assembly comprises at least a support portion two, comprising a protrusion structure formed by radially extending from the inner wall of the second base, wherein the support portion two can be continuous or disconnected internally.

7. The eccentric mechanism according to claim 5, wherein the first support assembly comprises at least a support member one, wherein the support member one is detachably connected to the lower portion of the weight structure or the lower portion of the first base, or both, and is configured to support the weight structure; and/or
wherein the second support assembly comprises at least a support member two, wherein the support member two is detachably connected to the lower portion of the weight structure, or the lower portion of the second base, or both, and is configured to support the eccentric block assembly.

8. The eccentric mechanism according to claim 5, wherein the first support assembly comprises at least a support member one, wherein the support member one can be continuous or disconnected internally, wherein the support member one further comprises:
a connecting portion one, comprising a protruding structure formed by extending a lower end surface of the first base in an axial direction; and
a support portion, comprising a protruding structure formed by extending the connecting portion one in a radial direction, and is configured to support the weight structure; and/or
wherein the second support assembly comprises at least a support member two, wherein the support member two is continuous or disconnected internally, wherein the support member two further comprises:
a connecting portion two, comprising a protruding structure formed by extending from a lower end surface of the second base in the axial direction; and
a support portion two, comprising a protruding structure formed by extending from the connecting portion two in a radial direction, and configured to support the eccentric block assembly.

9. The eccentric mechanism according to any one of claims 5-8, wherein the first clamping assembly comprises at least a clamping member one, wherein the clamping member one can be continuous or disconnected internally, and wherein the clamping member one further comprises:
an first connecting portion, comprising a protrusion structure formed by extending an upper end surface of the first base in an axial direction; and
an first clamping portion, comprising a protrusion structure formed by extending from the first connecting portion in a radial direction, and configured to block the axial movement of the weight structure; and/or
wherein the second clamping assembly comprises at least a clamping member two, wherein the clamping member two can be continuous or disconnected internally, and wherein the clamping member two further comprises:
a second connecting portion, comprising a protrusion structure formed by extending from an upper end surface of the second base in an axial direction; and
a second clamping portion, comprising a protrusion structure formed by extending from the second connecting portion in a radial direction, and configured to block the axial movement of the eccentric block assembly.

10. The eccentric mechanism according to claim 9, wherein the first placement region is formed by the area enclosed of the joint portion, the first clamping portion, the first base and the support portion one; and/or
wherein the second placement region is formed by the area enclosed of the second clamping portion, the second base and the support portion two.

11. The eccentric mechanism according to any one of claims 1-10, wherein the fan structure is disposed on an outer end surface of the mounting structure, further comprising:
the fan blade structure is distributed along a circumferential direction of the mounting base, and extending in a radial direction from an outer end surface of the mounting base; and
a second flow guiding passage, comprising a space formed between neighboring fan blade structure, wherein airflow is generated by the rotation of the fan blade structure driven by the rotation of the driving mechanism and/or working part and/or vane structure, wherein the airflow is outputted towards the working part through the second flow guiding channel, and wherein heat generated by an electric tool is dissipated.

12. The eccentric mechanism according to any one of claims 1-10, wherein the fan structure is disposed on the outer end surface of the mounting structure, further comprising:
the fan blade structure, distributed along a circumferential direction of the mounting base, and extending in a radial direction from an outer end surface of the mounting base;
an outer ring structure, comprising an annular structure disposed around the outer end of the blade structure;
a second flow guiding passage, comprising a space formed by neighboring fan blade, ,as well as space between the blade structure and the outer ring structure, wherein airflow is generated by the rotation of the fan blade structure driven by the rotation of the driving mechanism and/or working part and/or vane structure, wherein the airflow is outputted towards the working part through the second flow guiding channel, and wherein heat generated by an electric tool is dissipated.

13. The eccentric mechanism according to claim 11 or claim 12, wherein the fan blade structure further comprises:
a blade one, configured to have a length direction disposed along the outer end surface of the first base; and
a blade two, configured to have a length direction disposed along the outer end surface of the second base;
wherein the direction in which the fan blade structure is disposed does not parallel with the axial direction of the mounting base, thus forming an angle A.

14. A power tool, comprising:
a housing mechanism;
a driving mechanism disposed in the housing mechanism;
an output mechanism connected to the driving mechanism and disposed in the housing mechanism;
working parts configured for the operation of the power tool;
the output mechanism further comprises an output shaft having one end connected to the driving mechanism; and
the eccentric mechanism of any one of claims 1-13, wherein the eccentric mechanism is coupled to the working parts via a rotating shaft.

15. A power tool according to claim 14, further comprising a flow guiding device disposed on the housing mechanism, comprising:
a flow guiding body, composed of a part of the housing mechanism;
a baffle, disposed on the deflector body and disposed at an angle to the flow guiding body; and
at least an first guiding channel, comprising a channel formed between the baffle and the flow guiding body, and a channel formed between adjacent baffles, wherein the flow guiding path of the first guiding channel is disposed at an angle with the flow guiding body.

16. The power tool according to claim 15, wherein the first flow guiding channel further comprises:
an first passage, comprising an opening portion of the flow guiding body;
a second passage, comprising a space formed by a joint surface of the flow guiding body, the first end surface and the second end surface of the baffle;
wherein a flow path formed by the first channel and/or the second channel is gradually increased; and
wherein with the rotation of the drive mechanism and/or the working parts and/or the blade structure, the airflow generated by the rotation of the blade structure passes, through the second flow channel to the working parts or the first flow channel, to realize the dissipation of heat from the power tool.

17. The power tool according to any one of claims 14-16, wherein the housing mechanism comprises:
an first housing assembly, disposed in a lateral direction for wrapping internal members;
a second housing assembly, disposed longitudinally relative to the first housing assembly; and
at least one of the following: an first holding device for a user to hold and disposed on the first housing assembly, and a second holding device for a user to hold and disposed on the second housing assembly; wherein the second holding device is disposed on a side of the second housing assembly remote from a control structure, and wherein the first holding device and the second holding device are disposed to match the curvature of the user's fingers, and wherein the respective holding portions can be set to different concave surfaces.
